# EUROPEAN PATENT APPLICATION

(11) **EP 1 265 403 A2**
(43) Date of publication of application: **11.12.2002**
(21) Application number: 02012553.0
(22) Date of filing: 05.06.2002
(51) Int. Cl.: H04L 12/42

(54) **Loop network and method for operating the same**

(30) Priority: 05.06.2001 JP 2001169899
(71) Applicant: NEC CORPORATION, Tokyo (JP)
(72) Inventor: Kadoi, Tadashige, Tokyo (JP)
(74) Representative: VOSSIUS & PARTNER

(57) **Abstract**

A loop network without a standby loop is provided, wherein switch devices in plural stages are connected through multiple loops. The network has at least a pair of loops each of which transfers data in the opposite directions. Under normal conditions, the respective loops transfer data separately. On the other hand, when an error occurs in either loop in a switch device, a switch device located immediate upstream of the faulty section executes loop back operation to build one end of a C-loop. Moreover, the switch device in which the error occurs in the loop also executes loop back operation after outputting data in process to build the other end of the C-loop. By this way, the C-loop circumventing the faulty point can be established. Thereby, it becomes possible to transfer data through the C-loop with a guarantee, of ordering and to repair, replace and/or maintain the faulty point without any influenced on the network.

## Description

The present invention relates to a loop network without a standby loop, which is capable of transferring data through a degradation loop (C-loop) and repairing, replacing and maintaining a faulty point in the network with a guarantee of ordering of data when a fault occurs in the network, and a method for operating the same.

Heretofore, a loop topology network has been used as interconnect among a plurality of processor cards, memories and I/O (input and output) sections in a cluster system and a multiprocessor system wherein a plurality of computers are connected.

In these systems, when a fault occurs in a loop (line) or a connection function section (a switch device) connected to a loop, it becomes impossible to continue the operation through the loop. Namely, in a system using the loop network, if a single fault occurs in the loop (line) or the switch device, it becomes impossible to transmit data using the loop.

As a practical measure, a full duplex loop network has bee developed. In this network, when a fault occurs in a working loop, the processing having been executed in the working loop is resubmitted in a standby loop (for example, data having been transferred in the working loop is re-transmitted in the standby loop). Thereby, the down of a switch device can be prevented.

however, the full duplex loop network has the following problems.

First, while the standby loop is not used when there is no fault in the working loop, the standby loop has to be always maintained in preparation for occurrence of a fault in the working loop. In this network, only half of the whole loops are used in either case. Namely, data is transmitted only using the working loop when there is no fault, and only using the standby loop when a fault occurs. Therefore, even if a network is fully reduplicated by preparing (and maintaining) loops as many as those in a network, the data-carrying capability is not improved.

Second, it is extremely difficult to execute error processing, loop switchover processing, retry processing, etc. to all outstanding data flowing in the working loop. In the full duplex loop network, when a fault occurs in a switch device, an operating system (OS), a driver, an application, etc., which configure the network, has to execute fault processing to the switch device at respective levels in cooperation with each other to change from the working loop to the standby loop. Namely, in order to switch from the working loop to the standby loop, it is necessary not only to reduplicate the loops but also to execute appropriate processing with a precise timing in the whole system. If the fault processing is executed inappropriately, the whole system may go down in addition to the failure of the loop transition. Especially in a network without intervention of software such as an OS and a driver, the above-described processing has to be executed in hardware. Thereby, it is extremely difficult to fully reduplicate the network.

Moreover, if executing the so-called back track processing, data once released in the working loop is released again in the standby loop, thus leading to excessive loss in the system.

Incidentally, in a network such as a crossbar network and a hypercube network wherein a route is switched by means of multistage interconnect, it becomes extremely difficult to set routing as the number of switch devices increases, thus causing the deterioration of maintainability and expandability.

Moreover, a self-healing function (alternate loopback function) in FDDI (fiber distributed data interface), which serves as a loop network, is incapable of turning back data while preventing loss of data in process and securing ordering without switch devices. In this function, basically an alternate loop is in a standby state when a switchover is performed. Thereby, a station has to diagnose failuer during operation and has to execute loopback operation triggered by the occurrence of time-out, etc.

Moreover, as with the FDDI technology, data in process disappears under the configuration such that a switch device detects serious failuer in the device itself and directly informs the switch devices located immediate upstream and downstream that the switch device detected serious failure by signals. The immediate upstream and downstream switch devices execute loopback operation in response to the information to directly isolate the switch device having the serious failuer from the network, thus allowing for transition to a degradation loop. However, owners (components) that are to use the degradation loop have to be reset.

It is therefore an object of the present invention to provide a loop network and a degradation loop building method for building a degradation loop at the time of failuer and realizing high implementability of data transfer using the degradation loop with a guarantee of transaction ordering.

According to a first aspect of the present invention, for achieving the objects mentioned above, there is provided a loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until the data has been successfully transferred, and retransmits the buffered data when the transfer failed;
when an O-loop is used:
   each switch device takes in data addressed to a node related to the switch device, and delivers the data to the node, and transfers other data through the same loop through which the data was inputted;
when a fault occurs in a loop between adjacent two switch devices:
   a switch device located immediate upstream of the faulty section switches the O-loop to a C-loop by connecting an input port on the faulty loop to an output port on the other loop in one pair, and transfers buffered data from the output port; and
   after the switch device located immediate upstream of the faulty section switched the loop to the C-loop, a switch device located immediate downstream of the faulty section switches the O-loop to the C-loop by connecting an output port on the faulty loop and an input port on the other loop in one pair, and transfer data through the C-loop circumventing the faulty section;
when the C-loop is used;
   a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the switch device wherein the input port on a loop is connected to the output port on the other loop in one pair takes in all data addressed to a node related to the switch device, and transfers other data from the output port.

   According to a second aspect of the present invention, there is provided a loop network wherein a plurality of switch devices are connected through multiple loops, a pair of loops are connected to each of the switch devices, and the respective loops in one pair transmit data in the opposite directions, wherein:
   each node transmits data to another node through a predetermined loop using a predetermined switch device; and
   each switch device buffers data until the data has been successfully transferred, and retransmits the buffered data when the transfer failed;
when an O-loop is used:
   each switch device takes in data addressed to a node related to the switch device, and delivers the data to the node, and transfers other data through the same loop through which the data was inputted;
   when there is a direction to build a C-loop circumventing a section between arbitrary two switch devices adjacent to each other by a network maintainer:
      one of the two switch devices switches the O-loop to the C-loop by connecting an input port on a loop through which data is transferred to the other switch device and an output port on the other loop in one pair, and transfers buffered data from the output port; and
      the other switch device switches the O-loop to the C-loop by connecting an input port on a loop through which data is transferred to the one of the switch devices and an output port on the other loop in one pair, and transfers data through the C-loop circumventing the section between the switch devices;
when the C-loop is used;
   a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the switch device wherein the input port on a loop is connected to the output port on the other loop in one pair takes in all data addressed to a node related to the switch device, and transfers other data from the output port.

According to a third aspect of the present invention, in the first or second aspect, when the C-loop is switched to the O-loop;
one of the two switch devices in which the input port on a loop is connected to the output port on the other loop in one pair stops data transfer, buffers inputted data, and transmits a management packet through the C-loop, and when receiving the management packet again, transfers the buffered data through the C-loop, and switches the loop to the O-loop to start data transfer through the O-loop; and
the other switch device switches the loop to the O-loop when receiving the management packet, and transfers the management packet to the one of the switch devices.

According to a fourth aspect of the present invention, there is provided a loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device comprises a switch device switchover demanding means, a degradation loop transition means, a buffering data transferring means, and an ordering guarantee means;
when an O-loop is used:
   the ordering guarantee means in a switch device takes in data addressed to a node related to the switch device, delivers the data to the node, and transfers other data through the same loop through which the data was inputted; and
   the buffering data transferring means in a switch device buffers data until the data has been successfully transferred, and retransmits the buffered data when the transfer failed;
   when a fault occurs in a loop between adjacent two switch devices, the switch device switchover demanding means in a switch device detecting the fault transmits a switchover demand for switching the O-loop to a C-loop to a switch device located immediate upstream of the faulty section;
      the degradation loop transition means in the switch device that transmitted the switchover demand transfers data buffered by the buffering data transferring means through the O-loop, connects an output port on the faulty loop to an input port on the other loop in one pair to switch the O-loop to the C-loop; and
      having received the switchover demand, the buffering data transferring means in the switch device located immediate upstream of the faulty section switches the O-loop to the C-loop by connecting an input port on the faulty loop to an output port on the other loop in one pair, transfers buffered data from the output port, and transfers data through the C-loop;
when the C-loop is used;
   the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the ordering guarantee means in the switch device wherein the input port on a loop is connected to the output port on the other loop in one pair takes in all data addressed to a node related to the switch device, and transfers other data from the output port.

According to a fifth aspect of the present invention, there is provided a loop network wherein a plurality of switch devices are connected through multiple loops, a pair of loops are connected to each of the switch devices, and the respective loops in one pair transmit data in the opposite directions, including a switchover instructing means, wherein:
each node transmits data to another node through a predetermined loop using a predetermined switch device; and
each switch device comprises, a switch device switchover demanding means, a degradation loop transition means, a buffering data transferring means, and ordering guarantee means;
when an O-loop is used:
   the ordering guarantee means in a switch device takes in data addressed to a node related to the switch device, delivers the data to the node, and transfers other data through the same loop through which the data was inputted; and
   the buffering data transferring means in a switch device buffers data until the data has been successfully transferred, and retransmits the buffered data when the transfer failed;
   when the switchover instructing means is directed to build a C-loop circumventing a section between arbitrary two switch devices adjacent to each other by a network maintainer:
      the switchover instructing means transmits a switchover instruction to the switch device switchover demanding means in one of the switch devices;
      having received the switchover instruction, the switch device switchover demanding means in the one of the switch devices transmits a switchover demand for switching the O-loop to the C-loop to the other switch device;
      after the switch device switchover demanding means transmitted the switchover demand, the degradation loop transition means in the one of the switch devices to which the switchover instruction was inputted transfers data buffered by the buffering data transferring means through the O-loop, and switches the O-loop to the C-loop by connecting an input port on a loop through which data is transferred to the one of the switch devices to an output port on the other loop in one pair; and
      having received the switchover demand, the buffering data transferring means of the other switch device switches the O-loop to the C-loop by connecting an input port on a loop through which data is transferred to the one of the switch devices to an output port on the other loop in one pair, transfers buffered data from the output port, and transfers data through the C-loop circumventing the section between the two switch devices;
when the C-loop is used:
   the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the ordering guarantee means in the switch device wherein the input port of a loop is connected to the output port of the other loop in one pair takes in data addressed to a node related to the switch device, and transfers other data from the output port.

According to a sixth aspect of the present invention, in the fourth or fifth aspect, the loop network further includes a normal loop transition means, wherein, when the C-loop is switched to the O-loop:
the normal loop transition means in one of the two switch devices wherein the input port on a loop is connected to the output port on the other loop in one pair stops data transfer, buffers inputted data, and transfers a management packet through the C-loop, and when receiving the management packet again, transfers the buffered data through the C-loop, and switches the loop to the O-loop to start data transfer through the O-loop; and
having received the management packet, the normal loop transition means in the other switch device switches the loop to the O-loop, and transfers the management packet through the O-loop.

According to a seventh aspect of the present invention, there is provided a loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until the data has been successfully transferred, and retransmits the buffered data when the transfer failed;
when an O-loop is used:
each switch device takes in data addressed to a node related to the switch device, and delivers the data to the node, and transfers other data through the same loop through which the data was inputted; and
when hardware serious failure occurs:
   a switch device located immediate downstream of a usable loop switches the O-loop to a C-loop by connecting an output port on the usable loop and an input port on the other loop in one pair, and transfers buffered data from the output port; and
   a switch device located immediate upstream of the usable loop switches the O-loop to the C-loop by connecting an input port on the usable loop to an output port on the other loop in one pair, transfers buffered data from the output port, and transfers data through the C-loop circumventing the faulty section;
when the C-loop is used:
   a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

According to an eighth aspect of the present invention, there is provided a loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until data has been successfully transferred to a switch device located immediate downstream, and retransmits the buffered data to the switch device located immediate downstream when the transfer failed:
when an O-loop is used:
   each switch device takes in data addressed to a node related to the switch device, and delivers the data to the node, and transfers other data;
   when an arbitrary switch device is instructed to build a C-loop circumventing the switch device by a network maintainer:
      the instructed switch device directs one of the switch devices adjacent to the instructed switch device to switch the O-loop to the C-loop by connecting an input port on a loop through which data is transferred to the instructed switch device and an output port on the other loop in one pair, and to transfer buffered data from the output port; and
      the instructed switch device directs the other switch device to switch the O-loop to the C-loop by connecting an input port on a loop through which data is transferred to the instructed switch device and an output port on the other loop in one pair, to transfer buffered data from the output port, and to transfer data through the C-loop circumventing the instructed switch device;
when the C-loop is used:
   a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

According to a ninth aspect of the present invention, in any one of the first, second, seventh and eighth aspects, when the C-loop is switched to the O-loop:
a switch device that is to participate in the network transmits a management packet to one of the switch devices adjacent to the participating switch device;
having received the management packet, the one of the switch devices stops data transfer, buffers inputted data, switches the C-loop to the O-loop, and transfers the management packet through the O-loop, and when receiving the management packet again, transfers the buffered data through the O-loop, and start data transfer through the O-loop; and
having received the management packet, the other switch device switches the C-loop to the O-loop, transfers the management packet through the O-loop, and transfers data inputted thereafter through the O-loop.

According to a tenth aspect of the present invention, there is provided a loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device comprises a switchover notifying means, failure occurrence notifying means, a buffering data transferring means, and an ordering guarantee means;
when an O-loop is used:
   the ordering guarantee means in a switch device takes in data addressed to a node related to the switch device, delivers the data to the node, and transfers other data through the same loop through which the data was inputted;
   the buffering data transferring means buffers data until the data has been successfully transferred, and retransmits the buffered data when the transfer failed;
   the switchover notifying means in a switch device in which hardware serious failure occurred in a loop in one pair transmits a serious failure notification for demanding a switchover from the O-loop to a C-loop to a switch device located immediate downstream of the faulty section;
   after the switchover notifying means transmitted the serious failure notification, the failure occurrence notifying means in the switch device having the hardware serious failure transmits a switchover demand for switching the O-loop to the C-loop to a switch device located immediate upstream of the faulty section; and
   the buffering data transferring means in the switch device having received the serious failure occurrence notification or the switchover demand switches the O-loop to the C-loop by connecting an input port on a loop through which data can be transferred to the switch device that transmitted the failure occurrence notification or the switchover demand and an output port on the other loop in one pair, and transfers buffered data from the output port;
when the C-loop is used:
   the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
   the ordering guarantee means in the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

According to an eleventh aspect of the present invention, there is provided a loop network wherein a plurality of switch devices are connected through multiple loops, a pair of loops are connected to each of the switch devices, and the respective loops in one pair transmit data in the opposite directions, including a switchover instructing means, wherein:
each node transmits data to another node through a predetermined loop using a predetermined switch device; and
each switch device comprises a switchover notifying means, a failure occurrence notifying means, a buffering data transferring means, and an ordering guarantee means;
when an O-loop is used:
   the ordering guarantee means in a switch device takes in data addressed to a node related to the switch device, delivers the data to the node, and transfers other data through the same loop through which the data was inputted; and
   the buffering data transferring means buffers data until the data has been successfully transferred, and retransmits the buffered data when the transfer failed;
   when the switchover instructing means is directed to build a C-loop circumventing a switch device specified by a network maintainer:
      the switchover instructing means transmits a switchover instruction to the switchover notifying means in the specified switch device;
      having received the switchover instruction, the switchover notifying means in the specified switch device transmits a first switchover demand for switching the O-loop to the C-loop to one of the switch devices adjacent to the specified switch device;
      after the switchover notifying means transmitted the first switchover demand, the failure occurrence notifying means in the specified switch device transmits a second switchover demand for switching from the O-loop to the C-loop to the other switch device; and
      having received the first or second switchover demand, the buffering data transferring means in each of the switch devices switches the O-loop to the C-loop by connecting an input port on a loop through which data can be transferred to the sender of the first or second switchover demand to an output port on the other loop in one pair, transfers buffered data from the output port, and transfers data inputted thereafter through the C-loop circumventing the specified switch device;
when the C-loop is used:
   the ordering guarantee means in a switch device wherein an input port on a loop is not connected to an output port on the other loop takes in data addressed to a node related to the switch device and inputted through a predetermined loop of a node that transmitted the data, and transfers other data from an output port on the same loop through which the data was inputted; and
   the ordering guarantee means in the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

According to a twelfth aspect of the present invention, in any one of the fourth, fifth, tenth and eleventh aspects, the loop network further includes a normal loop transition means, wherein, when a switch device participates in the network and the C-loop is switched to the O-loop:
the normal loop transition means in the participating switch device transmits a management packet to one of the switch devices adjacent to the participating switch device;
having received the management packet, the one of the switch device stops data transfer, buffers inputted data, switches the C-loop to the O-loop, and transfers the management packet through the O-loop, and when receiving the management packet again, transfers the buffered data through the C-loop, and starts data transfer through the O-loop; and
when receiving the management packet from the one of the switch device, the other switch device switches the C-loop to the O-loop, and transfers the management packet through the O-loop.

According to a thirteenth aspect of the present invention, in any one of the fourth, fifth, tenth and eleventh aspects, the data includes information about a loop in which the data is being transferred, and the ordering guarantee means determines whether or not to take in data referring to the information.

According to a fourteenth aspect of the present invention, there is provided a method for operating a loop network wherein a plurality of switch devices are connected through multiple loops, a pair of loops are connected to each of the switch devices, and the respective loops in one pair transmit data in the opposite directions, when a fault occurs in a loop between adjacent two switch devices, including the steps of:
directing a switch device located immediate upstream of the faulty section to switch an O-loop to a C-loop by connecting an input port on the faulty loop to an output port on the other loop in one pair, and to transfer buffered data from the output port; and
directing a switch device located immediate downstream of the faulty section to switch the O-loop to the C-loop by connecting an output port on the faulty loop to an input port on the other loop in one pair to transfer data through the C-loop.

According to a fifteenth aspect of the present invention, there is provided a method for operating a loop network wherein a plurality of switch devices are connected through multiple loops, a pair of loops are connected to each of the switch devices, and the respective loops in one pair transmit data in the opposite directions, when there is a direction to build a C-loop circumventing a section between arbitrary two switch devices adjacent to each other by a network maintainer, including the steps of:
directing one of the two switch devices to switch an O-loop to a C-loop by connecting an input port on a loop through which data is transferred to the other switch device and an output port on the other loop in one pair, and to transfer buffered data from the output port; and
directing the other switch device to switch the O-loop to the C-loop by connecting an input port on a loop through which data is transferred to the one of the switch devices to an output port on the other loop in one pair to transfer data through the C-loop circumventing the section between the switch devices.

According to a sixteenth aspect of the present invention, in the fourteenth or fifteenth aspect, when the C-loop is used, the method for operating loop network further includes the steps of:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which the data was inputted; and
directing the switch device wherein the input port on a loop is connected to the output port on the other loop in one pair to take in all data addressed to a node related to the switch device, and to transfer other data from the output port.

According to a seventeenth aspect of the present invention, in any one of the fourteenth through sixteenth aspects, when switching the C-loop to the O-loop, the method for operating loop network further includes the steps of:
directing one of the two switch devices in which the input port on a loop is connected to the output port on the other loop in one pair to stop data transfer, to buffer inputted data, and to transfer a management packet through the C-loop;
directing the other switch device to switch the loop to the O-loop when receiving the management packet, and to transfer the management packet to the one of the switch devices; and
directing the one of the switch devices to transfer the buffered data through the C-loop when receiving the management packet again, and to switch the loop to the O-loop to start data transfer through the O-loop.

According to an eighteenth aspect of the present invention, there is provided a method for operating a loop network wherein a plurality of switch devices are connected through multiple loops, a pair of loops are connected to each of the switch devices, and the respective loops in one pair transmit data in the opposite directions, including the steps of:
instructing a switch device in which hardware serious failure occurred to direct a switch device located immediate downstream of a usable loop to switch an O-loop to a C-loop by connecting an output port on the usable loop to an input port on the other loop in one pair and to transfer buffered data from the output port; and
instructing the switch device in which the hardware serious failure occurred to direct a switch device located immediate upstream of the usable loop to switch the O-loop to the C-loop by connecting an input port on the usable loop to an output port on the other loop in one pair, to transfer buffered data from the output port, and to transfer data through the C-loop circumventing the switch device having the hardware serious failure.

According to a nineteenth aspect of the present invention, there is provided a method for operating a loop network wherein a plurality of switch devices are connected through multiple loops, a pair of loops are connected to each of the switch devices, and the respective loops in one pair transmit data in the opposite directions, when an arbitrary switch device is instructed to build a C-loop circumventing the switch device, including the steps of:
directing the instructed switch device to direct one of two switch devices adjacent to the instructed switch device to switch an O-loop to a C-loop by connecting an input port on a loop through which data is transferred to the instructed switch device to an output port on the other loop in one pair, and to transfer buffered data from the output port; and
directing the instructed switch device to direct the other switch device to switch the O-loop to the C-loop by connecting an input port on a loop through which data is transferred to the instructed switch device to an output port on the other loop in one pair, to transfer buffered data from the output port, and transfer data through the C-loop circumventing the instructed switch device.

According to a twentieth aspect of the present invention, in the eighteenth or nineteenth aspect, when the C-loop is used, the method for operating a loop network further includes the steps of:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which the data was inputted; and
directing the switch device wherein the input port on a loop is connected to the output port on the other loop in one pair to take in all data addressed to a node related to the switch device, to transfer other data from the output port, and not to transfer data addressed to a node related to the switch device that is not connected to the C-loop.

According to a twenty-first aspect of the present invention, in any one of the sixteenth, seventeenth, nineteenth and twentieth aspects, when switching the C-loop to the O-loop, the method for operating a loop network further including the steps of:
directing a switch device to participate in the network to transmit a management packet to one of the switch devices adjacent to the participating switch device;
directing the one of the switch devices to stop data transfer when receiving the management packet, to buffer inputted data, to switch the C-loop to the O-loop, and transfer the management packet through the O-loop;
directing the other switch device to switch the C-loop to the O-loop when receiving the management packet, to transfer the management packet through the O-loop, and to transfer buffered data through the O-loop; and
directing the one of the switch devices to transfer the buffered data through the C-loop when receiving the management packet again, to start data transfer, and to transfer data through the O-loop.

The objects and features of the present invention will become more apparent from the consideration of the following detailed description taken in conjunction with the accompanying drawings in which:
Fig. 1 is a diagram showing an example of a multiprocessor system using a loop network according to the present invention;
Fig. 2A is a diagram showing an example for explaining control of transition to C-loop using the loops L0 and L1 shown in Fig. 1 in the loop network according to a first embodiment of the present invention;
Fig. 2B is a magnified diagram showing the error section;
Fig. 3A is a diagram showing an example for explaining control of transition to C-loop using the loops L0 and L1 shown in Fig. 1 in the loop network according to the first embodiment of the present invention;
Fig.3B is a magnified diagram showing the both ends of the C-loop;
Fig. 4 is a diagram showing an example for explaining control of transition to C-loop using the loops L0 and L1 in the loop network according to a second embodiment of the present invention;
Fig. 5A is diagram showing an example for explaining control of transition to C-loop using the loops L0 and L1 in the loop network according to the second embodiment of the present invention;
Fig. 5B is a magnified diagram showing the both ends of the C-loop;
Fig. 6 is a diagram explaining an example of acquiring a fault error log;
Fig. 7 is a diagram showing an example of a multiprocessor system using the loop network as an interconnect according to the present invention;
Fig. 8 is a diagram showing a configuration of a switch device according to the present invention;
Fig. 9 is a diagram for explaining a flow of data transfer in the C-loop shown in Fig. 3A;
Fig. 10 is a diagram showing a transfer data format according to the present invention;
Fig. 11 is a diagram for explaining an example of control of isolating the switch device SW30 from the C-loop shown in Fig. 3A;
Fig. 12 is a diagram for explaining an example of transition to the C-loop according to the second embodiment of the present invention;
Fig. 13 is a diagram for explaining an example of control of transition from the C-loop to the O-loop; and
Fig. 14 is a diagram for explaining an example of control of transition form the C-loop to the O-loop.

Referring now to the drawings, embodiments of the present invention will be explained in detail.

First, an explanation will be given of configuration of a loop network according to the preset invention.

The loop network according to the present invention is a network connecting switch devices in plural stages through multiple loops. In this network, a pair of loops is connected to each switch device (port), and the respective loops transfer data in the opposite directions. The respective loops in one pair are operated separately under normal conditions (when there is no fault on each of the loops and/or in a switch device(s)).

In the loop network according to a first embodiment, when failuer occurs on a loop (line) or in an inputting section (input port section) of a switch device, a degradation loop (C-loop) is built so as to circumvent the faulty point, and data is transferred with a guarantee of ordering by the use of the C-loop.

In the loop network according to a second embodiment, when hardware serious failure occurs in a switch device, a C-loop is built so as to circumvent the faulty switch device, and data is transferred with a guarantee of ordering by the use of the C-loop.

In the loop network according to a third embodiment, when maintaining, replacing and repairing a loop (line) or an inputting section (input port section) of a switch device having no fault, a C-loop is built so as to circumvent the object point, and data is transferred with a guarantee of ordering by the use of the C-loop.

In the loop network according to a fourth embodiment, when maintaining, replacing and repairing a switching device having no hardware serious failuer, a C-loop is built so as to circumvent the object switch device, and data is transferred with a guarantee of ordering by the use of the C-loop.

The loop network may be configured so as to switch a degradation loop (C-loop) to a normal loop (O-loop) without interrupting data transfer.

The loop network of the present invention may be implemented according to any one of the first to fourth embodiments, or may be implemented combining plural embodiments thereof. Preferably, the loop network may be configured so as to comprise all functions according to the first to fourth embodiments.

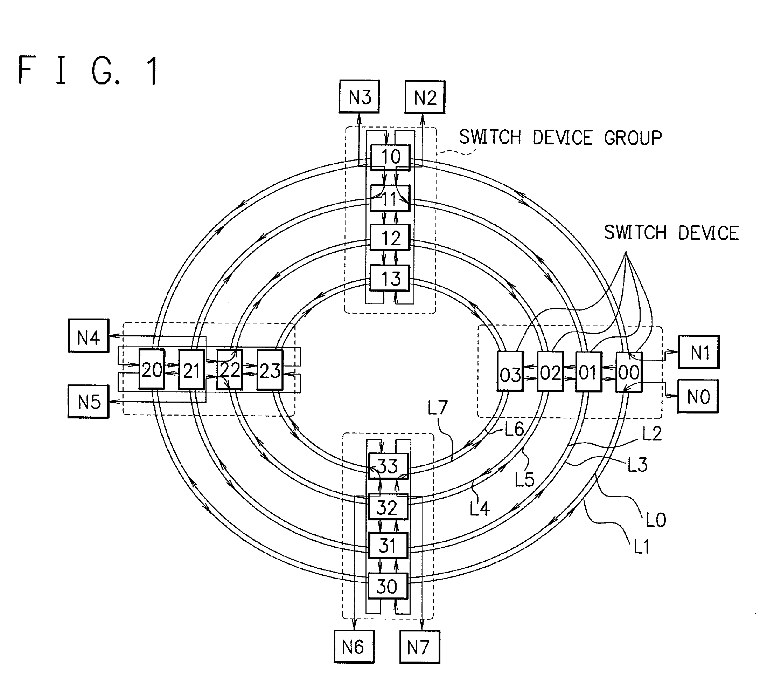

Fig. 1 shows an example of a coupling configuration of a network using the above-described high-reliability loop network. As shown in Fig. 1, components (nodes), for example, N0 through N7 are connected to each other via switch devices SW00 through SW33 and loops L0 through L7. The loop network has a dual loop configuration in which two loops as one pair are connected to each of the switch devices SW00 through SW33 and the respective loops transfer data in the opposite directions.

For example, the loops L0 and L1 are connected to the switch device SW00. The loop L0 transfers data in a clockwise direction, and the loop L1 transfers data in a counterclockwise direction under normal conditions. The two loops connected to the respective switch devices are regarded as a pair.

Each loop Ln (n is a positive integer) is exclusively used by a node Nn among Nx (x is a positive integer). Each node transfers data through its exclusive loop under normal conditions. For example, the node Nn uses the loop Ln to transfer data to the other node Ni (i≠n). In the example shown in Fig. 1, the node N0 uses the loop L0 for data transfer, the node N1 uses the loop L1, the node N2 uses the loop L2, and so forth. Each node transmits and receives data through a switch device directly connected thereto and connected to the corresponding exclusive loop. As shown in Fig. 1, the nodes N0 and N1 use the switch device SW00 directly connected thereto and connected to the respective exclusive loops L0 and L1. The nodes N2 and N3 use the switch device SW11 directly connected thereto and connected to the respective exclusive loops L2 and L3. The nodes N4 and N5 use the switch device SW22 directly connected thereto and connected to the respective exclusive loops L4 and L5. The nodes N6 and N7 use the switch device SW33 directly connected thereto and connected to the respective exclusive loops L6 and L7. Moreover, as shown in Fig. 1, the switch devices surrounded by the dotted line are described as a switch device group, in which data are transferred in two directions. The switch devices in a switch device group are connected to each other. For example, refer to the switch devices SW20 through SW23 in the switch device group connected to the nodes N4 and N5. The switch device SW21 is connected to the switch device SW20 in two directions. The switch device SW20 is connected to the switch device SW23 in two directions. The switch device SW23 is connected to the switch device SW22 in two directions. The respective switch device groups have two nodes as owners. As shown in Fig. 1, the nodes N0 and N1 are owners of the switch device group that consists of the switch devices SW00 through SW03. The nodes N2 and N3 are owners of the switch device group that consists of the switch devices SW10 through SW13. The nodes N4 and N5 are owners of the switch device group that consists of the switch devices SW20 through SW23. The nodes N6 and N7 are owners of the switch device group that consists of the switch devices SW30 through SW33. When data arrives at a switch device group connected to a destination owner, the data is transferred to the switch device directly connected to the owner, and thereby, the data arrives at the destination owner.

For example, when data is transmitted from the node N0 to the node N4, the node N0 transmits data via the switch device SW00, and the data is transmitted through the exclusive loop L0. After the switch device SW20 receives the data via the switch device SW30, the data is transferred to the switch device SW22 directly connected to the node N4. Subsequently, the node N4 receives the data from the switch device SW21.

For example, a network disclosed in Japanese Patent Application Laid-Open No. 2002-16634 may be applied to such a loop network disclosed by the present invention as described.

In the following, an explanation will be given of embodiments of the present invention taking the switch devices SW00, SW10, SW20, SW30, and the loops L0 and L1 shown in Fig. 1 as an example.

### First Embodiment

Each switch device in the loop network used in the first embodiment comprises a first switch device switchover demanding means, a degradation loop transition means, a buffering data transferring means, and a first ordering guarantee means. The loop network used in this embodiment is configured so as to establish a degradation loop (C-loop) when a fault occurs and transfer data using the C-loop with a guarantee of ordering. Thereby, high reliability of the network (system) can be realized. Incidentally, each switch device preferably includes a first normal loop transition means. In the following, an explanation will be given of a case where a fault occurs in an input port of a switch device.

### First Switch Device Switchover Demanding Means

The first switch device switchover demanding means is a means, when an error is detected in an input port for either loop of one pair in a switch device, to transmit a switchover demand (retry demanding packet) to a switch device located immediate upstream of the faulty point.

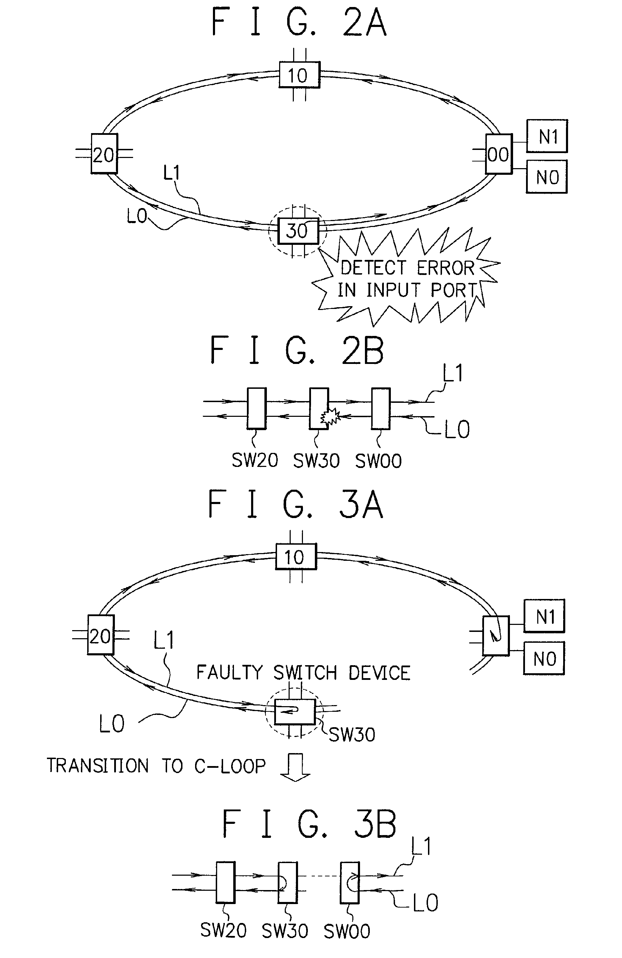

In the network in Fig. 2A and 2B, the first switch device switchover demanding means in the switch device SW30 monitors the respective input ports for the loops L0 and L1 connected to the switch device SW30 to detect whether or not there exists an error on the loops L0 and L1 in a well-known manner. When the demanding means detects an error in the input port for the loop L0 as shown in Fig. 2B, the demanding means outputs a switchover demand to the switch device SW00, which is located in immediate upstream of the faulty point, through the loop L1. Namely, the demanding means outputs the switchover demand using a loop having no error. Incidentally, a network maintainer may find out a switch device (loop) having a fault by monitoring the network to repair, replace and/or maintain the faulty point.

### Degradation Loop Transition Means

The degradation loop transition means is a means to let out (output) all data in process in a switch device and shift to a C-loop after the first switch device switchover demanding means in the same switch device outputs the switchover demand.

After the switch device switchover demanding means in the same switch device outputs the switchover demand, the degradation loop transition means transmits all data in process to a switch device located in immediate downstream from the output port of the same loop through which the data was inputted.

After outputting (transmitting) all data in process, the degradation loop transition means builds a C-loop. To be concrete, the transition means connects the input port for the loop having no error to the output port for the loop having the error. Thereby, one end of the C-loop is completed circumventing the error point.

In Fig. 2A, the degradation loop transition means processes the data fed from the switch device SW00 via the loop L0. That is, the transition means receives (takes in) the data sent to itself (the owner of the switch device SW30), and outputs the data addressed to the other devices (SW20 or SW10) through the non-faulty side of the loop L0. The same processes are executed at the faulty side of the loop L1.

Subsequently, the degradation loop transition means in the switch device SW30 connects the input port for the loop L1 to the output port for the loop L0. In other words, the transition means builds a path (line) to output data inputted from the switch device SW20 through the loop L1 back to the switch device SW20 through the loop L0. Thereby, one end of the C-loop is completed from the switch device SW30 to the switch device SW00 via the switch devices SW20 and SW10 in this order through the loop L0. In other words, because the error is detected in the input port for the loop L0 in the switch device SW30, one end of the C-loop is built for circumventing the loops L0 and L1 between the switch devices SW00 and SW30.

### Buffering Data Transferring Means

The buffering data transferring means is a means to store (buffer) data transferred (transmitted) to a next switch device located immediate downstream until the next switch device receives the data.

The buffering data transferring means in the respective switch devices buffers data transferred to a next switch device located immediate downstream. When the data arrives at the next switch device, the transferring means clears the buffered data. On the other hand, when the data does not arrive at the next switch device (informed by the reception of the switchover demand), the transferring means transfers the buffered data to the next switch device a predetermined number of times (namely, the transferring means executes retry of data transfer). Incidentally, the transferring means can employ a well-known method for determining whether or not data arrives at a next switch device (namely a method for executing retry of data transfer), and thereby, the explanation is abbreviated.

After executing retry of data transfer a predetermined number of times, however, when the data still does not arrive at the next switch device, the transferring means builds the other end of the C-loop by connecting the input port for the loop on the side where the sender of the switchover demand is located immediate downstream to the output port for the other loop.

After building the other end of the C-loop, the transferring means transfers the buffered data to the switch device that transmitted the switchover demand through the C-loop. Namely, the transferring means transfers the data that failed to arrive at the switch device (the sender of the switchover demand) because of the occurrence of the error through the C-loop.

In Fig. 2A, when the switch device SW00 transfers data to the switch device SW30 through the loop L0, the buffering data transferring means in the switch device SW00 buffers the data. When the data arrived at the switch device SW30, the transferring means clears the buffered data. On the other hand, when the data failed to arrive at the switch device SW30 (namely, when the switch device SW00 received a switchover demand from the switch device SW30), the transferring means retransmits the data (executes retry).

When the retry failed, the transferring means in the switch device SW00 connects the input port for the loop L0 to the output port for the loop L1 at the side of the switch device SW10 as shown in Fig. 3B. Namely, the transferring means switches the flow of the data from the normal direction (for example, from the switch device SW00 to the switch device SW30 in the loop L0) to the opposite direction using the other loop L1. The data inputted from the switch device SW10 to the switch device SW00 through the loop L0 is transferred to the switch device SW30 via the switch devices SW10 and SW20 in this order through the loop L1. By this means, the C-loop is completed as shown in Figs. 3A and 3B.

After the C-loop is completed, the transferring means in the switch device SW00 transfers the data (buffered data), which was transmitted (transferred) to the switch device SW30 through the loop L0 however failed to arrive at the switch device SW30, to the switch device SW30 using the loop L1 (C-loop). In other words, the transferring means transfers again the data that failed to arrive at the next switch device using the loop (C-loop) having no error.

### First Ordering guarantee means

When data is transmitted through the C-loop, the first ordering guarantee means in each switch device takes in (downloads) data addressed to an owner (one of the two nodes) of the switch device and transferred through the exclusive loop. When inputted data is not addressed to the owner of the switch device, or when data is addressed to the owner but is not inputted via the input port for the exclusive loop, the first ordering guarantee means transfers the data through the loop identical to the loop through which the data is inputted. Incidentally, the respective first ordering guarantee means in the switch devices located at the both ends (the "end" means a place where a pair of loops is connected to each other to build U-turn) of the C-loop take in all data addressed to owners of the switch devices regardless of whether or not the data is transmitted through the exclusive loop. The first ordering guarantee means of the switch devices at the both ends of the C-loop (hereinafter referred to as end switch devices) transfer data addressed to other owners.

In the loop network according to the present invention, each data is transmitted using a predetermined exclusive loop as described above. For example, the component N0 uses the loop L0 to transfer data addressed to another component. However, when the C-loop is used, data may be transferred through a loop different from the exclusive loop (hereinafter referred to as the different loop; the other loop of the exclusive loop in one pair) in some cases. For example, it sometimes happens that data transferred through the exclusive loop L0 under normal conditions may be transferred through the different loop L1 when the C-loop is applied. If a switch device takes in data inputted through the different loop, the ordering of data gets mixed up. Thereby, each switch device takes in only data addressed to its owner and inputted through the exclusive loop by the first ordering guarantee means.

Namely, when data is transferred through the C-loop, the first ordering guarantee means determines whether the data is transferred through the exclusive loop or through the different loop in one pair. When the data is transferred through the different loop, the guaranteeing means does not take in the data even if the data is addressed to the owner of the switch device of the guaranteeing means, and transfers the data to the next switch device. On the other hand, when the data is addressed to the owner of the switch device and is inputted through the exclusive loop, the guaranteeing means takes in the data. By this means, it becomes possible to guarantee ordering of data flowing through the C-loop.

Moreover, each first ordering guarantee means in the end switch devices takes in all data addressed to the owners of the switch devices.

When data is transferred through the C-loop, each of the end switch devices has only one input port because an input port and an output port in either side are looped back and those in the other side are circumvented. The data that was supposed to be inputted from the circumvented input port is inputted from the input port for the different loop. Thereby, the respective guaranteeing means of the end switch devices take in all received data regardless of whether the data is inputted through the exclusive loop or the different loop.

Here an example is taken of a case where data is transferred from the node N0 to the node N4 shown in Fig. 1. Under normal condition (namely, when there is no error), the data would be inputted from the switch device SW00 to the switch device SW20 via the switch device SW30 through the exclusive loop L0. However, when the data is transferred through the C-loop as shown in Fig. 3A, the switch device SW00 is not directly connected to the switch device SW30. Thereby, the data is transferred from the switch device SW00 to the switch device SW20 via the switch device SW10 through the different loop L1. Namely, the data is inputted to the switch device SW20 through the different loop L1 instead of the exclusive loop L0.

The first ordering guarantee means of the switch device SW20 docs not take in the data because, while the data is addressed to the owner (node N4) of the switch device SW20, the data is inputted through the different loop L1. Subsequently, the guaranteeing means transfers the data to the next switch device SW30 through the loop L1 although the data is addressed to the owner of the switch device SW20.

The switch device SW30 receives the data through the loop L1. The first ordering guarantee means of the switch device SW30 transfers the data to the next switch device (SW20) because the data is not addressed to the owner of the switch device SW30. As described above, the degradation loop transition means in the switch device SW30 has already built the one end of the C-loop by connecting the input port for the loop L1 and the output port for the loop L0. Thereby, the guaranteeing means of the switch device SW30 transfers the data to the next switch device SW20 through the loop L0.

The guaranteeing means in the switch device SW20 takes in the data because the data is addressed to the owner of the switch device SW20 and inputted through the exclusive loop L0.

In the following, an example is taken of a case where data is transferred from the node N0 to the node N6 shown in Fig. 1. Under normal condition, the data would be inputted to the switch device SW30 through the exclusive loop L0. However, when the data is transferred through the C-loop shown in Fig. 3A, the switch device SW00 is not directly connected to the switch device SW30. Thereby, the data is transferred to the switch device SW30 via the switch devices SW10 and SW20 in this order through the different loop L1. As shown in Fig. 3A, the switch device SW30 is the one end. of the C-loop, and thereby, the guarantee means in the switch device SW30 takes in the data because the data is addressed to the owner of the switch device SW30 even if the data is inputted through the different loop L1.

Incidentally, a node transmits data through its exclusive loop even when the network is degraded; namely, Nn transmits data through its exclusive loop Ln when the C-loop is used. In the above example shown in Fig. 3A, the node N1 transmits the data through the exclusive loop L1. However, the node N0 has no choice but to transmit data through the different loop L1 when the C-loop is used. This is because the switch device SW00 is located at one end of the C-loop in which the input port for the loop L0 is connected to the output port for the loop L1. Thereby, the node N0 transmits data to the only usable output port, namely, the output port for the loop L1. First Normal Loop Transition Means

The first normal loop transition means is a means to switch the network from the C-loop to the 0-loop.

When switching the C-loop to the O-loop, the first normal loop transition means that transmitted the switchover demand (retry demanding packet) stops data transfer, and buffers all inputted data. Subsequently, the transition means transmits a management packet to the switch device (the switch device located at the other end of the C-loop) that received the switchover demand.

Having received the management packet, the switch device that received the management packet (which is located immediate upstream of the faulty point) switches the C-loop to the O-loop. Namely, the first normal loop transition means releases the connection between the input port for one of loops and the output port for the other loop in one pair and connects the input ports to the output ports for the same loop, respectively, to shift to the O-loop.

Having switched to the O-loop, the first normal loop transition means transmits the management packet to the same loop through which the management packet is inputted. Namely, the transition means sends the management packet back to its sender through the O-loop. After transferring the management packet, data transfer is executed through the O-loop.

Having received the management packet, sender (the switch device) of the management packet transfers all of the buffered data to the C-loop. Subsequently, the first normal loop transition means in the switch device (sender of the management packet) switches the C-loop to the O-loop to start again data transfer through the O-loop. By this means, it becomes possible to guarantee ordering of data at the time of switching the C-loop to the O-loop.

In the example in Fig. 3A, when shifting from the C-loop to the O-loop, the first normal loop transition means in the switch device SW30 stops data transfer, and buffers all data inputted thereafter. Subsequently, the transition means transmits the management packet to the switch device SW00 through the loop L0.

Incidentally, it is possible to make a decision on the transition from the C-loop to the O-loop arbitrarily. For example, the transition means may switch the C-loop to the O-loop on the basis of instructions from a network maintainer. Moreover, it is also possible to determine the transition to the O-loop when it is detected that the error is eliminated from the faulty loop (line) by monitoring the faulty loop in a well-known manner.

Having received the management packet transferred from the switch device SW30 via the switch devices SW20 and SW10 in this order through the loop L0, the first normal loop transition means in the switch device SW00 switches the C-loop to the O-loop. To be concrete, the transition means connects the input ports for the loops L0 and L1 to the output ports for the loops L0 and L1, respectively.

Subsequently, the management packet is transmitted to the switch device SW30 through the loop L0 in the O-loop. Namely, the management packet is sent back to the sender of the management packet.

After the management packet is transferred to the switch device SW30, the switch device SW00 transfers data inputted thereafter through the O-loop.

Having received the management packet, the first normal loop transition means in the switch device SW30 loops back the data (buffered data), which was transmitted from the switch device SW00 through the loop L1 before the switch device SW00 switches the C-loop to the O-loop, to the C-loop through the loop L0. Subsequently, the transition means switches the C-loop to the O-loop to start again data transfer through the O-loop. To be concrete, the transition means connects the input ports for the loops L0 and L1 to the output ports for the loops L0 and L1, respectively. After the connection, data inputted from the switch device SW00 into the switch device SW30 through the loop L0 is transferred to the switch device SW20 through the same loop L0, and data inputted from the switch device SW20 into the switch device SW30 through the loop L1 is transferred to the switch device SW00 through the same loop L1.

Incidentally, it is possible to determine whether or not the sender switch device of the management packet finishes transmitting the (buffered) data, which has been transferred through the C-loop from the destination switch device of the management packet before the destination switch device switches the C-loop to the O-loop, to the C-loop in a well-known manner.

For example, the switch device SW00 (destination switch device of the management packet) may add a mark (information for indicating that the data is the last one) to the last data transferred to the C-loop. The switch device SW30 (sender of the management packet) may switch from the C-loop to the O-loop after the switch device SW30 received (and transferred) the marked data to the C-loop.

For another example, the switch device SW00 may output data, which indicates that the switch device SW00 has been switched to the O-loop, after the last data is transferred to the C-loop. The switch device SW30 may switch the C-loop to the O-loop after having received the data.

Incidentally, while in the above-described embodiment the switch device having detected the faulty loop transmits the management packet, the other end switch device may transmit the management packet. Namely, either of the end switch devices may transfer the management packet. In the example in Figs. 3A and 3B, the switch device SW00 may transfer the management packet to the switch device SW30. In this case, the operation in the above explanation is reversed, namely, the operation executed by the switch device SW30 is done by the switch device SW00, and the operation executed by the switch device SW00 is done by the switch device SW30.

### Second Embodiment

In a loop network according to second embodiment, a C-loop is build circumventing a switch device in which hardware serious failure occurs, and data is transferred using the C-loop with a guarantee of ordering.

In the above-described example in the first embodiment, an error occurs in the input port of the loop L0 between the switch devices SW30 and SW00. Thereby, the switch devices SW30 and SW00 execute the loop back operation to switch the loop to the C-loop, thus enabling circumventing the error position. The error position that lies between the switch devices SW30 and SW00 goes out of use by the C-loop, and thereby, it becomes possible to maintain, repair and/or replace the error position (switch device).

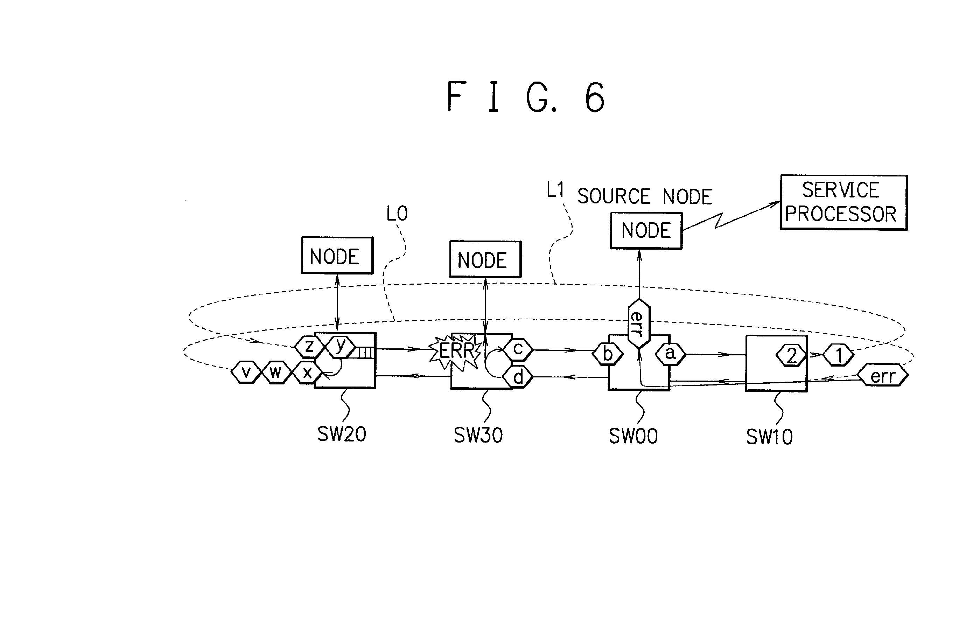

In this second embodiment, an example is taken of a case of transition to a C-loop when hardware serious failure occurs. To be concrete, the case is such that hardware serious failure occurs in a transferring section in the switch device SW30, which means that the maintenance, repair, and/or replacement of the switch device SW30 is required. In this case, the C-loop is built by the loops L0 and L1 from the switch device SW20 to SW00 and from the switch device SW00 to SW20 via the switch device SW10 as shown in Figs. 5A and 5B. Thereby, it becomes possible to isolate the switch device SW30 to maintain, repair, and/or replace the device SW30 preventing down of the network and continuing the data transfer among the switch devices SW00, SW10, and SW20.

Each switch device in the loop network according to the second embodiment comprises a first switchover notifying means, a failure occurrence notifying means, a buffering data transferring means, and a second ordering guarantee means. Further, it is preferable to include a second normal loop transition means.

The following is an explanation referring to switch devices SW00, SW10, SW20, and SW30 and the loops L0 and L1 as with the first embodiment.

### First Switchover Notifying Means

When serious failure (hardware serious failure) occurs in a switch device, the first switchover notifying means in the switch device transmits a notification (serious failure notification) for demanding a switchover to a C-loop to either switch device immediately adjacent to the faulty switch device.

The first switchover notifying means monitors whether or not hardware serious failure occurs in the own switch device at any time using a well-known method. When hardware serious failure occurs, the notifying means identifies the faulty point. Incidentally, a network maintainer may find out the faulty switch device (faulty section) by monitoring whether or not hardware serious failure occurs.

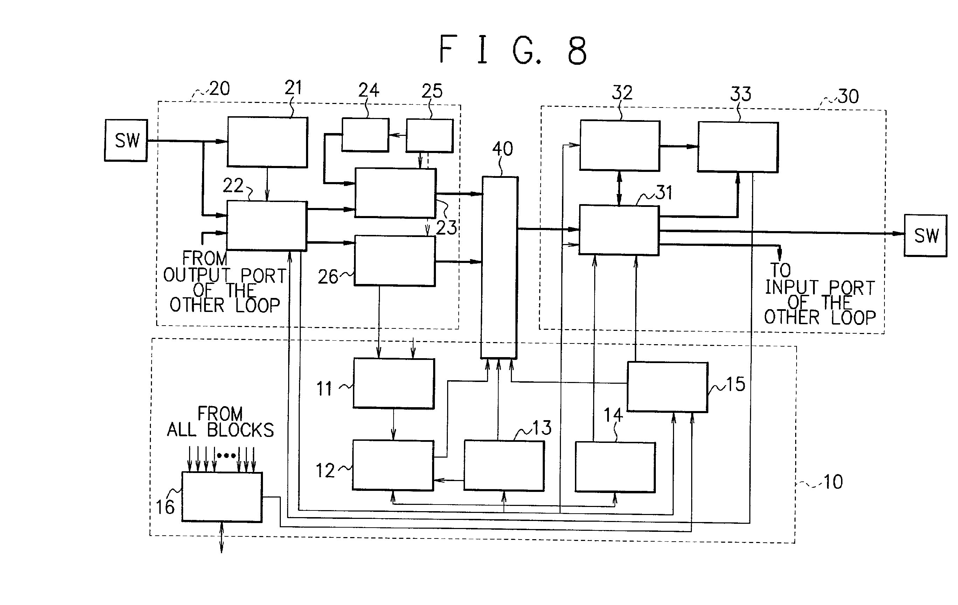

When serious failure occurs in a transferring section (including the input FIFO section 23, etc. through the loopback control section 33 in Fig. 8) for one loop, the notifying means transmits a serious failure notification to the switch device located immediate downstream of the faulty point. When serious failure occurs in a transferring section for both loops (including the intersection 10 and the crossbar 40 in Fig. 8), the notifying means transmits a serious failure notification to either of the switch devices located on the both sides through a usable loop.

The buffering data transferring means in the switch device having received the serious failure notification builds one end of the C-loop circumventing the faulty switch device. Namely, the transferring means connects the output port for the loop through which the notification was inputted to the input port for the other loop.

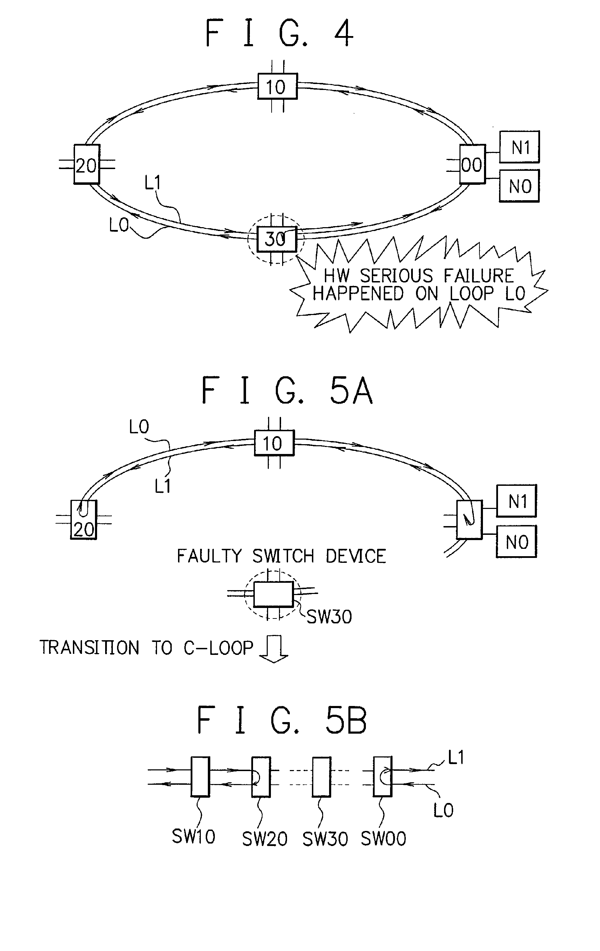

As shown in Fig. 4, when failure occurs in a transferring section for the loop L0 in the switch device SW30, the switch device SW30 cannot transfer data inputted from the switch device SW00 through the loop to the switch device SW20 using the same loop L0. Thereby, the first switchover notifying means of the switch device SW30 transmits a serious failure notification to the switch device SW20 located immediate downstream of the faulty point through the usable loop L1 to order the switch device SW20 to build one end of the C-loop by connecting the input port for the loop L1 and the output port for the loop L0 as shown in Figs. 5A and 5B.

Having received the notification, the buffering data transferring means in the switch device SW20 builds one end of the C-loop as described above. To be concrete, the transferring means connects the input port for the loop L1 to the output port for the loopL0 in the switch device SW20 for circumventing the faulty switch device SW30.

Failure Occurrence Notifying Means and Buffering Data Transferring Means.

The failure occurrence notifying means is a means to transmit a notification (loop switchover demand) to the other switch device than that to which the serious failure notification is transmitted between the switch devices on the both sides (hereinafter referred to as "the other side switch device") to order to switch (from) the O-loop to a C-loop.

The switch device that transmitted the serious failure notification outputs data in process through a usable loop. Subsequently, the switch device transmits the switchover demand to the other side switch device through the other loop of the faulty loop.

The switch device having received the switchover demand activates the buffering data transferring means therein. Subsequently, the buffering data transferring means builds the other end of the C-loop, and retrieves, from a buffer, data that has failed to be transferred regularly to transfer the data to the destination switch device through the C-loop. At this time, the buffering data transferring means may not retrieve and transmit data addressed to the switch device that sent the switchover demand.

In the example in Fig. 4, the failure occurrence notifying means in the switch device SW30 transmits a switchover demand to the switch device SW00 (the other side switch device) through the loop L1 to order to build the other end of the C-loop so that data inputted from the switch device SW10 through the loop L0 can be sent back to the switch device SW10 through the loop L1.

Having received the switchover demand, the buffering data transferring means in the switch device SW00 conducts transition to the C-loop. To be concrete, the transferring means connects the input port for the loop L0 to the output port for the loop L1 as shown in Fig. 5B. Subsequently, the transferring means transfers data, which has failed to be transferred, to the next switch device SW10 through the loop L1 in the C-loop.

### Second Ordering guarantee means

The second ordering guarantee means has the same function and operates as with the first ordering guarantee means. However, the respective second ordering guarantee means in the switch devices located at the both ends of the C-loop does not transfer data addressed to a switch device unable to transmit data (the switch device circumvented by the C-loop). Namely, when the data addressed to the circumvented switch device is inputted to the respective end switch devices, the second ordering guarantee means discards the data. Incidentally, the data addressed to the circumvented switch device is transferred under the control of the second ordering guarantee means in the same manner as the first ordering guarantee means in the first embodiment until arrived at either of the end switch devices.

In Fig. 5A, it is assumed that data addressed to the owner of the circumvented switch device SW30 is flowing between the switch devices SW20 and SW10 through the exclusive loop. The second ordering guarantee means in the switch device SW10 determines whether or not the data is addressed to the owner of the switch device SW10. Having determined that the data is addressed to the owner of the switch device SW30, the second ordering guarantee means in the switch device SW10 transfers the data to the switch device SW00. The switch device SW00 is located at one end of the C-loop, and thereby, the second ordering guarantee means in the switch device SW00 discards the data.

Moreover when using the C-loop, each owner in the loop network does not transmit data addressed to the circumvented switch device (switch device SW30). Incidentally, the second ordering guarantee means in the end switch devices may buffer the data addressed to the circumvented switch device instead of the discard, and may transfer the buffered data to the circumvented switch device after the C-loop is switched to the O-loop.

### Second Normal Loop Transition Means

The second normal loop transition means is a mean to switch the C-loop to the O-loop.

When the isolated switch device comes back to the network, the second normal loop transition means in the isolated switch device transmit a management packet to either switch device located at the both sides. In the following, it is assumed that the management packet is transmitted to the switch device located immediate upstream of the object switch device.

The switch device having received the management packet stops transferring data, and switches (from) the C-loop to the O-loop. The switch device buffers data inputted after stopping the data transfer. Subsequently, the switch device transfers the management packet through the same loop through which the management packet was inputted.

Having received the management packet from the switch device located immediate upstream of the object switch device (which is to participate in the network), the switch device located immediate downstream of the object switch device transfers data in process through the C-loop, and subsequently, switches the C-loop to the O-loop. After that, the switch device located immediate downstream of the object switch device transfers the management packet through the same loop through which the management packet was inputted. Namely, the switch device transfers the management packet to the sender of the management packet (the switch device that comes back to the network).

Having received the management packet, the sender of the management packet transfers the inputted management packet to the switch device located immediate upstream.

Having received the management packet again, the switch device located immediate upstream of the object switch device transmits the buffered data through the O-loop, namely, through the same loop through which the data was inputted. After that, data is transferred through the O-loop.

Thereby, the isolated switch device can be returned to the network with a guarantee of data ordering.

In the example of Fig. 5A, when the isolated switch device SW30 is returned to the network (when switching the C-loop to the O-loop), the switch device SW30 transmits a management packet to the switch device SW00 located immediate upstream of the faulty position through the loop L1.

Having received the management packet, the second normal loop transition means in the switch device SW00 stops data transfer, and buffers data inputted while stopping data transfer. Subsequently, the transition means switches (from) the C-loop to the O-loop. To be concrete, the switch device SW00 connects the input ports for the loops L0 and L1 to the output ports for the loops L0 and L1, respectively. After that, the switch device SW00 transfers the management packet through the loop L1.

Having received the management packet from the switch device SW00 via the switch device SW10 through the loop L1, the switch device SW20 located immediate downstream of the object switch device outputs data in process through the C-loop (loop L0). Subsequently, the switch device SW20 switches the C-loop to the O-loop. Namely, the switch device SW20 connects the input ports for the loops L0 and L1 to the output ports for the loops L0 and L1, respectively. After that, the switch device SW20 transfers the management packet through the loop L1.

The switch device SW00 receives again the management packet via the switch device SW30 through the loop L1. Triggered by the reception of the management packet again, the switch device SW00 transfers the buffered data to the same loop L0 through which the data was inputted. After that, data is transferred using the O-loop.

Incidentally, before transmitting the management packet, the switch device SW30 has to connect the input ports for the loops L0 and L1 to the output ports for the loops L0 and L1, respectively.

Moreover, the switch device SW30 may transmit the management packet to the switch device SW20 located immediate downstream through the loopL0. In this case, the processes executed by the switch device SW00 is done by the switch device SW20, and vice versa.

Moreover, it is also possible to apply the second normal loop transition means to the loop network described in the first embodiment. Namely, by the use of the second normal loop transition means, it becomes possible to add a new switch device to a circumvented section as preventing the network from stopping. Thereby, it becomes possible to increase the number of the switch devices without interference of the data transfer.

Moreover, in the switch device wherein the hardware serious failure occurs, when the output section for the faulty loop is usable, it is also possible to construct the same C-loop as that shown in the first embodiment.

As shown in Fig. 4, even if the transfer section for the loop L0 in the switch device SW30 is unusable, when the output port section (the section to transfer data to the switch device SW20) for the faulty loop L0 is usable, it is possible to build the C-loop as shown in Fig. 3A using the same procedure explained in the first embodiment. Namely, the faulty transfer section for the loop L0 can be circumvented by constructing the C-loop as shown in Fig. 3A. In this case, the faulty section can be replaced, maintained and repaired since the section is not used by the C-loop shown in Fig. 3A.

### Third Embodiment

A loop network according to a third embodiment has a function to maintain, repair and/or replace a loop (line) or an input port of a switch device regardless of whether or not a fault occurs on the loop or in the input port. Namely, even in the case where there is no such error as shown in Figs. 2A and 2B, it is possible to construct a C-loop circumventing the object loop or input port as shown in Figs. 3A and 3B.

The loop network according to the third embodiment further includes a first switchover instructing means in addition to the configuration used in the first embodiment. The first switchover instructing means may be included in a service processor. Moreover, in each switch device used in the loop network according to the third embodiment, the first switch device switchover demanding means in the first embodiment is replaced with a second switch device switchover demanding means. Incidentally, the first normal loop transition means in this embodiment switches a C-loop to an O-loop only when an instruction about the transition is issued by a network maintainer.

The first switchover instructing means is a means to instruct a switch device located immediate downstream of the part of a loop to be maintained, repaired, and/or replaced to build a C-loop circumventing the part according to an instruction by a network maintainer.

In the following, an example is taken of a case of maintaining, repairing, and/or replacing the loop L0 between the switch devices SW00 and SW30 referring to Figs. 2A and 3A. In this case, the first switchover instructing means instructs the switch device SW30 located immediate downstream of the object part to build one end of the C-loop isolating the object part as shown in Fig. 3A according to an instruction by a network maintainer.

In response to the instruction, the second switch device switchover demanding means in the switch device SW30 transmits a switchover demand to the switch device SW00 located immediate upstream of the object part (loop L0 between the switch devices SW30 and SW00). Namely, the second switch device switchover demanding means transmits the switchover demand triggered by the instruction by the first switchover instructing means, not by the detection of an error on a loop as described in the first embodiment.

The subsequent operation is the same as that described in first embodiment. Namely, in response to the switchover demand, each means operates as with in the first embodiment, and thereby, the C-loop shown in Fig. 3A can be built.

Incidentally, it is preferable that a network maintainer issues the instruction to the switch devices located at both (either) sides of the object section indirectly through a switch device or directly through a diagnostic interface or the like by using the first switchover instructing means.

### Fourth Embodiment

A loop network according to a fourth embodiment has a function to maintain, repair and/or replace a switch device regardless of whether or not failure occurs in a switch device. Namely, even in the case where there is no error (hardware serious failure) in a switch device differently from the case shown in Fig. 4, it is possible to construct a C-loop circumventing the object switch device as shown in Fig. 5A.

The loop network according to the fourth embodiment further includes a second switchover instructing means in addition to the configuration used in the second embodiment. The second switchover instructing means may be included in a service processor. Moreover, in each switch device used in the loop network according to the fourth embodiment, the first switchover notifying means is replaced with a second switchover notifying means. Incidentally, the second normal loop transition means in this embodiment switches a C-loop to an O-loop only when an instruction about the transition is issued by a network maintainer.

The second switchover instructing means is a means to instruct a switch device to be maintained, replaced and/or repaired to build a C-loop circumventing the switch device according to an instruction by a network maintainer.

In the following, an example is taken of a case of maintaining, repairing and/or replacing the switch device SW30 referring to Figs. 4 and 5A. In this case, the second switchover instructing means instructs the switch device SW30 to build a C-loop isolating itself (the C-loop shown in Fig. 5A) according to an instruction by a network maintainer.

The second switchover notifying means in the switch device SW30 transmits a serious failure notification to either of the switch devices SW00 or SW20 directly connected to the switch device SW30. By this means, the second switchover notifying means transmits the serious failure notification triggered by the instruction from the second switchover instructing means, not by the detection of hardware serious failure in the own switch device as described in the second embodiment.

The subsequent operation is the same as that described in the second embodiment. Namely, in response to the serious failure notification, each means operates as with in the second embodiment, and thereby, the C-loop shown in Fig. 5A can be built.

Incidentally, it is preferable that a network maintainer issues the instruction to the switch devices located at both (either) sides of the object switch device indirectly through a switch device or directly through a diagnostic interface or the like by using the second switchover instructing means.

Further, the network maintainer may use the second switchover instructing means to construct the C-loop circumventing an input port for a loop (and an output port for the other loop) as with the third embodiment.

Incidentally, each switch device used in the loop network according to the respective first and the second embodiments may include a fault error log acquisition demanding means. The fault error log acquisition demanding means notifies a service processor about the occurrence of a fault (failure), and requires the service processor to acquire a fault (failure) error log. By the fault error log acquisition demanding means, it becomes possible to identify a faulty point (switch device) and speed up maintenance, etc. As a method for acquiring a fault error log, a well known method can be employed.

For example, as shown in Fig. 6, when a fault occurred, the switch device (SW00, SW20, or the like) that received a notification (the switchover demand, the serious failure notification, or the like) notifies a service processor about the fault occurrence. The service processor acquires the fault error log according to the notification. Incidentally, the switch device SW30 that detected the error may notices the service processor about the fault occurrence.

By the notification to the service processor, a network maintainer can acquire the fault error log, thus enabling the maintainer to maintain, repair and/or replace the faulty point rapidly.

Incidentally, the service processor may be connected to each node via a backdoor interface. Moreover, the service processor may be connected to each switch device through the backdoor interface.

Incidentally, when the loop network is configured so as not to switch the O-loop to the C-loop, the loopback function may not be implemented. Namely, the loop network may be configured so as not to switch the O-loop to the C-loop even when a fault occurs. In this case, for example, it is also possible to bring whole loops (system) down.

### Basic Configuration of Loop Network

The loop network according to the present invention is used as interconnect that connects components of computers such as a plurality of CPU (central processing unit) cards, memories, and IOs (inputs and outputs) used in a multiprocessor system, and as a cluster system wherein a plurality of computers are connected. The applicant of the present invention has confirmed that preferable effects are obtained when applying the present invention to the loop network disclosed in Japanese Patent Application Laid-Open No. 2002-16634.

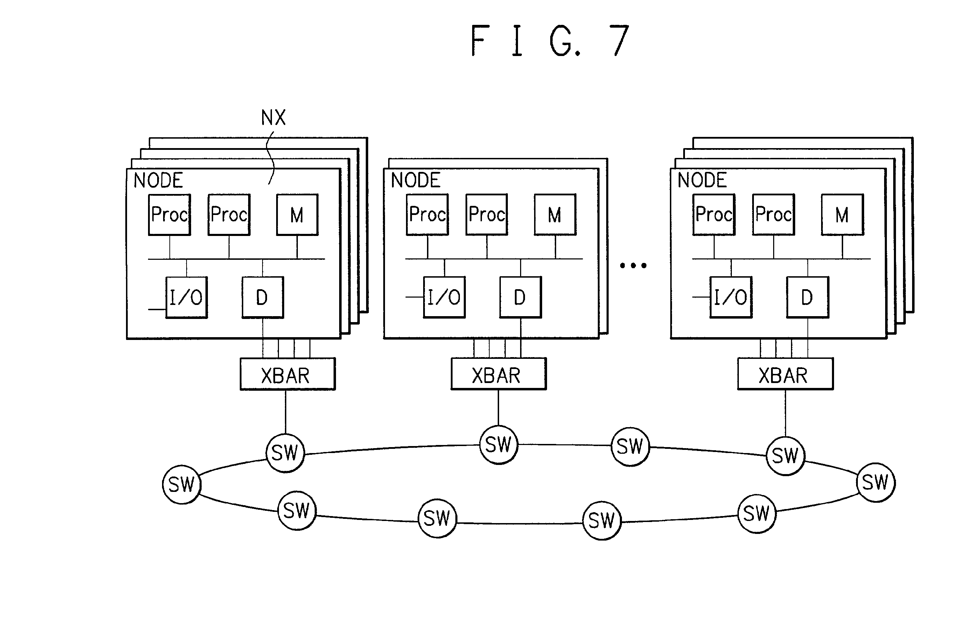

In the following, an explanation will be given of operation of the loop network according to the above-described embodiments. The loop network in this explanation configures a multiprocessor system as shown in Fig. 7. In other words, this multiprocessor system uses the loop network according to the present invention as interconnection for connecting resources to each other. In this example shown in Fig. 7, a node (component) comprises a plurality of modules connected to each other through a cross bar (XBAR in Fig. 7). Each module (computer module) includes CPUs (proc), a memory and memory controller (M), an I/O controller (I/O), and a director (D). Each switch device is connected through a loop network.

In the following, an example is given of a configuration of a switch device used in the loop network according to the present invention referring to Fig. 8.

Each switch device comprises an intersection 10, two input port sections 20 for a pair of loops, and two output port sections 30 for the pair of loops, and two crossbars 40 for the pair of loops. Namely, the input port 20, the output port 30, and the crossbar 40 are disposed with respect to each loop of one pair in a switch device. Therefore, for example, the switch device SW30 comprises two input port sections 20, two output port sections 30, and two crossbars 40 for the respective loops L0 and L1, and an interconnection 10 used by the both loops L0 and L1. In Fig. 8, there is shown the input port section 20, the output port section 30, and the crossbar 40 for either loop in one pair, and the intersection 10 shared by both the loops for simplicity.

The input port section 20 includes an input buffer control section 21, a decode control section 22, an input FIFO (first-in, first-out) section 23, a dummy generating section 24, a VC (virtual channel) control section 25, and a management data buffer section 26.

The input buffer control section 21 checks a header part of received data, guarantees data integrity, and controls a protocol(s) in an input interface. Moreover, the input buffer control section 21 informs the decode control section 22 about the result of the checking.

The decode control section 22 executes decode and dispatch to a header part of received data. When receiving a management packet, the decode control section 22 communicates with each section in the other loop of one pair. Moreover, an ordering guarantee means is implemented when decode is executed in this block.

The input FIFO section 23 is a buffer for holding received data with respect to each virtual channel.

The dummy generating section 24 generates dummy data when a link is disconnected at the input side while receiving a packet to supplement the packet for preventing data transfer from being interrupted. By this operation, the packet can be transferred for the time being.

The VC control section 25 controls virtual channels for the purpose of deadlock circumvention. The VC control section 25 determines data length with respect to each virtual channel, and identifies a header part and a data part of output data.

The management data buffer section 26 is a detour used when an error occurred and the like, and enables packets, which are required to be urgently transmitted, to be passed through the switch device via the management data buffer section 26 even if data is clogged, for example, in the input FIFO section 23 because of a fault, etc.

Incidentally, under normal conditions, data is transferred from the decode control section 22 only to the input FIFO section 23, not to the management data buffer section 26. On the other hand, when an error occurs (the loops are degraded), data is transferred only to the management data buffer section 26 (or both of the input FIFO section 23 and the buffer section 26).

The output port section 30 includes an output data generating section 31, a retry control section 32, and a loopback control section 33.

The output data generating section 31 adds an ID, credit information, an error detecting code, etc. to output data, and executes format control of output data to suit the data to an output format. Moreover, the generating section 31 generates a management packet.

The retry control section 32 has a retry FIFO function, and holds a copy of output data. Moreover, the retry control section 32 manages data IDs at the side of the output port, and controls retransmission sequence.

The loopback control section 33 controls the loop back operation when data transfer fails because of a disconnection of a link owing to hardware serious failure (fault), etc. In the case where a packet is being transferred when the link is disconnected, the loopback control section 33 generates an error informing packet and turns back the remaining packet (the part of the packet that has not been transferred) after transmitting the error informing packet.

The crossbar 40 includes n pieces of input ports and output ports, each of the same number n (n is an arbitrary number), respectively, and connects the input port section 20 and the output port section 30.

The intersection 10 includes a routing table control section 11, an arbiter 12, an input flow control section 13, an output flow control section 14, a loop topology control section 15, and an error handling control section 16.

The routing table control section 11 keeps a routing table, and determines a destination port (node) on the basis of a header part of a packet.

The arbiter 12 executes arbitration of crossbars.

The input flow control section 13 counts the number of output data from the input FIFO section 23 with respect to each virtual channel. Moreover, the input flow control section 13 has control over notifying transmission-reception control information such as credit information to (and from) the side of a sending end.

The output flow control section 14 counts the number of output data from the output port with respect to each virtual channeL Moreover, in response to (credit) information from a receiving end, the out put flow control section 14 executes hold control of the arbiter 12.

The loop topology control section 15 issues instructions to each section so as to implement a switch device switchover demanding means, a degradation loop transition means, a switchover notifying means, a failure occurrence notifying means, a normal loop transition means, and the like. Moreover, the loop topology control section 15 executes switchover control of loops to the own switch device and next switch devices on both sides.

### Example of Operation of Loop Network According to First Embodiment

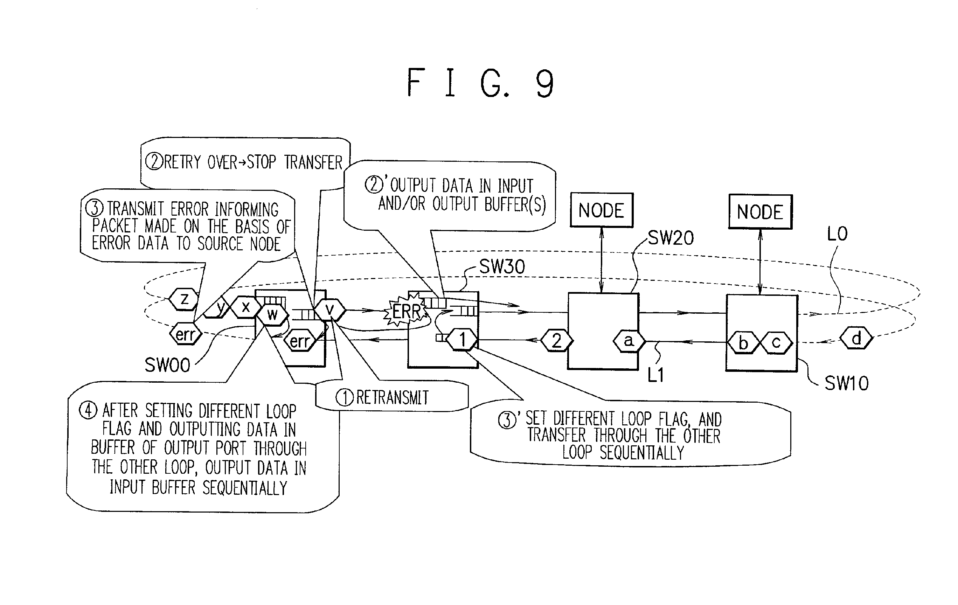

In the following, an example will be given of transition operation from the O-loop to the C-loop in the first embodiment referring to Fig. 9 (taking the loops L0 and L1, switch devices SW00 through SW30, etc. shown in Fig. 1 for example).

Fig. 9 shows an example of operation of isolating a faulty section (the loop line L0 between the switch devices SW00 and SW30) by switching the O-loop to the C-loop when a fault occurs by which the input buffer control section 21 in the switch device SW30 cannot continue to use the Loop L0. In Fig. 9, the data "v" outputted from the switch device SW00 does not arrive at the switch device SW30 because of the fault in the input port section 20 of the switch device SW30 in the loop L0.

When the data "v" is not inputted into the switch device SW30 via the input port section 20 for the loop L0, the error handling control section 16 in the switch device SW30 directs the output data generating section 31 of the loop L1 to output a retry demanding packet to the switch device SW00 located immediate upstream of the faulty point. The retry demanding packet is regarded as the switchover demand when the conditions 1 and 2 explained below are satisfied.

Having detected that the input buffer section 21 for the loop L1 receives the packet (condition 1), the error handling control section 16 in the switch device SW00 directs the retry control section 32 for the loop L0 to retransmit the data "v" to the switch device SW30 (① in Fig. 9). The retry control section 32 retransmits the data "v" that has not arrived at the switch device SW30 through the output data generating section 31 for the loop L0.

When the transfer fails although the retry control section 32 retransmits the data "v" a predetermined number of times, the error handling control section 16 in the switch device SW00 directs the output data generating section 31 to stop the transfer of the data "v" (retry over; ② in Fig. 9). Namely, when the input buffer control section 21 for the loop L1 in the switch device SW00 receives (detects) the retry demanding packet a predetermined number of times, the control section 16 in the switch device SW00 regards the situation as a retry over, and determines not to retransmit the data "v". (Incidentally, the error handling control section 16 in the switch device SW30 directs the output data generating section 31 to output the retry demanding packet each time the input into the input port section 20 in the switch device SW30 fails.)

Having detected the retry over (condition 2), the error handling control section 16 in the switch device SW00 directs the loop topology control section 15 to switch the O-loop to the C-loop. Namely, the loop topology control section 15 builds one end of the C-loop by connecting the input port for the loop L0 (having the error thereon) to the output port for the loop L1 (having no error thereon).

By this means, when receiving the retry demanding packet (condition 1) and detected the retry over (condition 2) as described above (namely, when the conditions 1 and 2 are satisfied), the switch device SW00 regards the retry demanding packet as the switchover demand.

The error handling control section 16 in the switch device SW00 extracts information about a source switch device (for example, the switch device SW20), namely, the sender of the data "v" from the header part of the data "v" to create an error informing packet (data "err") (③ in Fig. 9). Subsequently, the error informing packet is transmitted from the output data generating section 31 for the loop L1 through the C-loop to the source switch device SW20. Namely, the switch device SW00 determines that the error occurred in (on) the loop L0 between the switch devices SW00 and SW30 or in the input port section 20 for the loop L0 in the switch device SW30, and transmits the error informing packet to the source switch device SW20 through the loop L1 (C-loop).

Immediately after the transmission of the error informing packet, the data "v" in the output data generating section 31 (output buffer) for the loop L0 in the switch device SW00 is outputted to the C-loop to empty the output data generating section 31. On this occasion, a different loop flag is set to the data "v". Thereafter, the operation through the C-loop is started. Namely, the data "w", "x", "y" and "z", which were inputted into the switch device SW00 through the input buffer control section 21 for the loop L0 after the data "v", are transferred sequentially to the loop L1 in the C-loop following on the data "v" (④ in Fig. 9). On this occasion, as with the above explanation, a different loop flag is put up to the respective data "w", "x", "y" and "z".

The error informing packet is transferred to the source switch device SW20 through the loop L1 via the switch devices SW10. Having received the error informing packet, the switch device SW20 finds out (detects) the occurrence of the fault in the loop L0 between the switch devices SW00 and SW30.

On the other hand, when detecting the retry over by checking the number of retransmission, the error handling control section 16 in the switch device SW30 directs the input buffer control section 21 and the output data generating section 31 for the loop L0 to output data held therein to the loop L0 to empty their contents (②' in Fig. 9). After the control section 21 and the generating section 31 emptied, the error handling control section 16 in the switch device SW30 directs the loop topology control section 15 to switch the O-loop to the C-loop, namely, to connect the input port section 20 for the loop L1 to the output port section 30 for the loop L0. After the other end of the C-loop was built, a different loop flag is set to the respective data "1" inputted into the switch device SW30 after the C-loop was built, and the data are outputted to the loop L0 (C-loop) (the different loop flag will also be set to data "2", "a", "b", "c" and "d") (③' in Fig. 9). In this way, the C-loop is completed as shown in Fig. 3A.

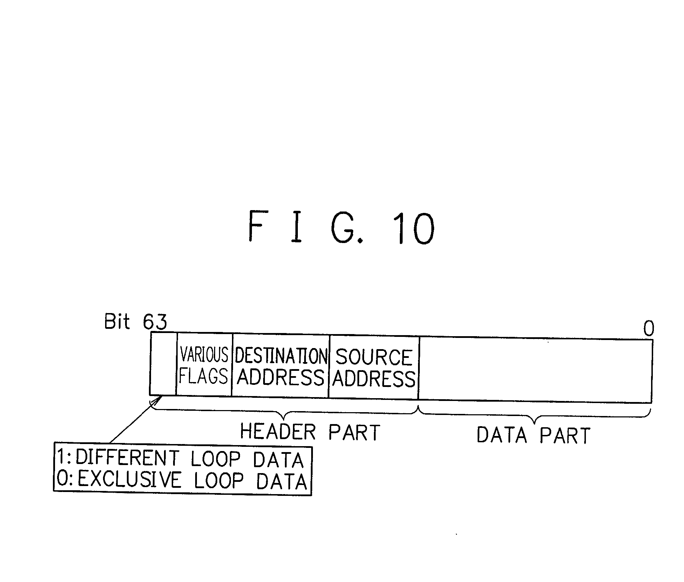

In the following, an explanation will be given of data transfer through the C-loop referring to Figs. 3A and 10.

Each switch device takes in data using the ordering guarantee means. To be concrete, the ordering guarantee means in each switch device determines whether or not the data is addressed to the owner of each switch device by referring a header part of inputted data. Moreover, the guarantee means determines whether the data was inputted through the exclusive loop or the different loop by referring to a flag set to the header part of the data. The flag falls into two categories: one is an exclusive loop flag indicating that data is now flowing through an exclusive loop; and the other is a different loop flag indicating that data is now flowing through the other loop of the exclusive loop in one pair. When data is outputted to its exclusive loop, the exclusive loop flag is set to a header part of the data. However, when the data flows into the C-loop (namely, when the data is U-turned at the end of the C-loop), the exclusive loop flag is reset to the different loop flag. The different loop flag is reset to the exclusive loop flag at the other end of the degradation loop (namely, when the data flows back to the exclusive loop). Incidentally, the switch device directly connected to the respective nodes sets (writes in) the header part of each data.

Each switch device directly connected to a sender of data (node) adds a flag indicating a loop wherein the data is flowing, and transfers the data to each loop.

The ordering guarantee means in each switch device refers to the destination address and the flag both in the header part to determine whether or not the data is addressed to one of the owners (nodes) of the switch device and whether the data is inputted from the exclusive loop or the different loop. After the reference, when it is determined that the data is addressed to the one of the owners and inputted from the exclusive loop, the switch device takes in the data. On the other hand, when it is determined that the data is not addressed to one of the owners, or that the data is addressed to one of the owners but is not inputted from the exclusive loop (namely, the data is inputted from the different loop), the ordering guarantee means transfers the data to the next switch device. Incidentally, the respective end switch devices take in all data addressed to the owners of the respective switch devices regardless of whether the data is inputted through the exclusive loop or the different loop. This is because only one input port is usable owing to the C-loop.

Assuming that the node N0 transmits data to the node N4 shown in Figs. 1 and 3A. First, the information indicating that the destination is the node N4, etc. is added and the exclusive loop flag is set to the header part of the data. However, during the C-loop operation, the input port of the loop L0 is looped back to the output port of the loop L1 in Fig. 3A, and thereby, the switch device SW00 has to output the data to the different loop L1. When outputting the data to the different loop L1, the switch device SW00 sets the different loop flag.

Having received the data from the input port for the loop L1 via the switch device SW10, the switch device SW20 refers to the header part of the data. As a result of the reference, the switch device SW20 acknowledges that the data is addressed to the component N4, which is one of the owners of the switch device SW20, and that the data has been transferred through the different loop L1. Thereby, the switch device SW20 transfers the data to the next switch device SW30 through the loop L1.

Having received the data, the switch device SW30 refers to the header part of the data. The switch device SW30 acknowledges that the data is not addressed to one of the owners of the switch device SW30, and thereby, the switch device SW30 transfers the data to the next switch device SW20 through the loop L0. The switch device SW30 is located at the other end of the C-loop, and thereby, the device SW30 resets the different loop flag to the exclusive loop flag.

Having received the data through the loop L0, the switch device SW20 refers to the header part of the data, and acknowledges that the data is addressed to the node N4, which is one of the owners of the switch device SW20, and the data has been transferred through the exclusive loop L0. Thereby, the switch device SW20 takes in the data.

Assuming that the above-described data is addressed to the node N6, having received the data from the switch device SW00 via the switch devices SW10 and SW20 in this order through the loop L1, the switch device SW30 refers to the header part of the data, and acknowledges that the data is addressed to the node N6, which is one of the owners of the switch device SW30, and that the data has been transferred through the different loop L1. Although the data was inputted through the different loop L1, the switch device SW30 takes in the data because the device SW30 is located at one end of the C-loop.

By this means, it becomes possible to determine whether the input data is transferred through the exclusive loop or the different loop by referring the flag set to the data. Namely, even if the data that would be regularly transferred through an exclusive loop is inputted to a destination switch device through a different loop, the switch device transfers the data to the next switch device without taking in the data. Thereby, it becomes possible to guarantee the ordering of data.

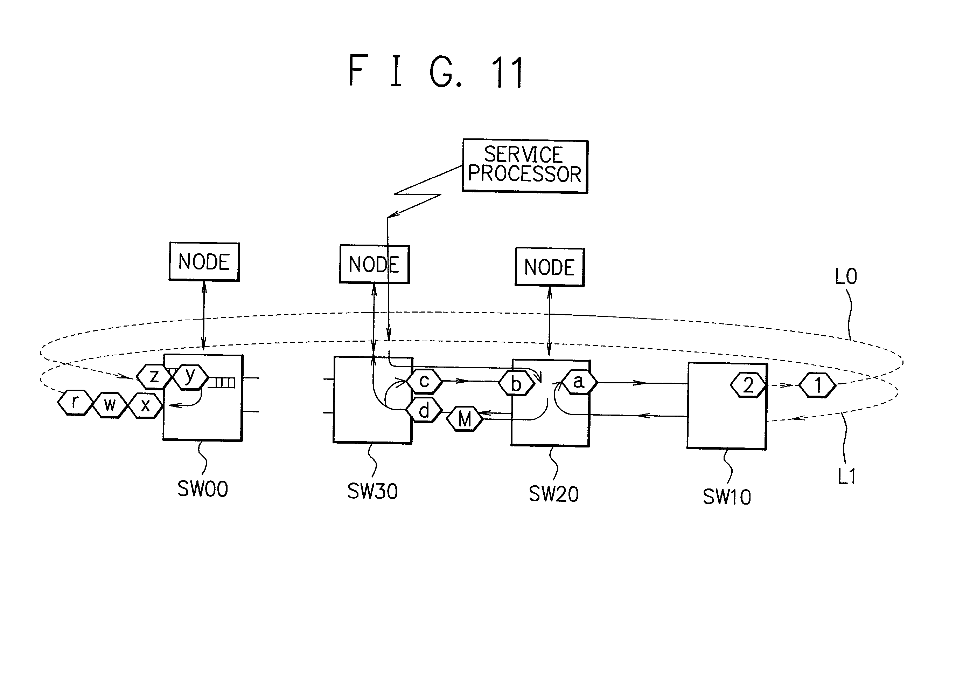

In the following, an explanation will be given of isolating control for a switch device that has detected a fault in reference to Fig. 11.

Fig. 11 shows an example of a case of isolating a switch device located at one end of the C-loop after the C-loop shown in Fig. 3A was completed to replace, repair, and/or maintenance the switch device.

Assuming that the switch device SW30 shown in Fig. 11 is to be isolated. The service processor issues an instruction to isolate the switch device SW30 to the switch device SW30. The switch device SW30 transfers the isolating instruction to the switch device SW20 located immediate downstream of the switch device SW30 in the C-loop.

When the decode control section 22 for the loop L0 received the isolating instruction, the error handling control section 16 in the switch device SW20 directs the loop topology control section 15 to shift to the C-loop (actually, the loop back operation is executed when the management packet is returned), and the output port section 30 to stop data transfer. While the data transfer is stopped, inputted data are buffered. Subsequently, the switch device SW20 outputs a management packet for isolation ("M" in Fig. 11) to the switch device SW30. The switch device SW20 monitors the return of the management packet.

Having received the management packet, the switch device SW30 outputs data existing in the switch device SW30. Namely, the data "b", "c", and "d" inputted from the switch device SW20 through the loop 1 are U-turned to the switch device SW20 through the loop L0. After outputted all data, the switch device SW30 returns the management packet to the switch device SW20 through the loop L0. The management packet is the last data outputted to the C-loop.

Having received the management packet, the switch device SW20 loops back the input port for the loop L1 to the output port for the loop L0. Thereby, one end of the C-loop is completed from the switch device SW00 to the switch device SW20 via the switch device SW10. After that, the switch device SW20 transfers the data "b", "c", and "d" outputted from the switch device SW30 through the loop L0 to the same loop. Subsequently, the switch device SW20 starts the data transfer using the C-loop. Namely, the switch device SW20 transfers data inputted from the switch device SW10 through the loop L1 back to the switch device SW10 through the loop L0.

By this means, it becomes possible to minimize the influence of the fault and to switch the 0-loop to the C-loop immediately.

### Example of Operation of Loop Network According to Second Embodiment

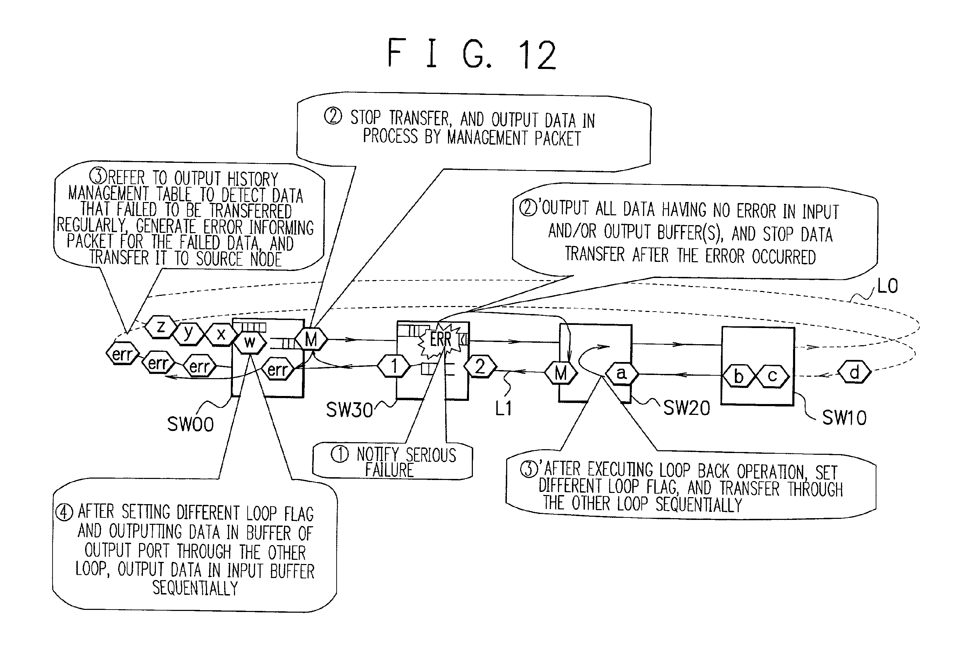

In the following, an example will be given of control operation in the case where hardware serious failure occurs in a switch device, and thereby there is a need to isolate the switch device from the network referring to Fig. 12.

Each switch device constantly monitors whether or not there is a fault inside of the switch device applying a well-known method. When detecting a fault (hardware serious failure), the switch device informs the both neighbor switch devices about the occurrence of the fault.

For example, when hardware serious failure occurs at the side of the loop L0 in the switch device SW30, the device SW30 transmits a serious failure notification to either of the switch devices located at both sides (for example, the switch device SW20) through a usable loops L0 or L1 using the switchover notifying means (① in Fig. 12). Moreover, the switch device SW30 transmits a switchover demand to the other switch device (for example, the switch device SW00) using the failure occurrence notifying means.

Having received the serious failure notification and the switchover demand, the respective switch devices SW20 and SW00 stop transferring data to the switch device SW30. and transmit a management packet to the switch device SW30 through the loops L1 and L0, respectively, to output data in process in the switch device SW30 (② in Fig. 12). The switch device SW30 having received the management packets outputs all data stored therein through a usable loop, and stops the data transfer (②' in Fig. 12).

Moreover, the error handling control section 16 in the switch device SW00 directs the loopback control section 33 of the loops L0 to extract information about a source switch device (for example, the switch device SW20), namely, the sender of the data that failed to be transferred from the header part of the failed data to create an error informing packet. The loopback control section 33 creates an error informing packet referring to, for example, a history management table indicating a series of data that failed to be transferred regularly, which is stored in the loopback control section 33. Subsequently, the created error informing packet is transferred to the source switch device SW20 through the loop L1 (③ in Fig. 12). After the transmission of the error informing packet, the error data is outputted with a different loop flag added thereto through the different loop L1. After all data in the output buffer of the loop L0 is outputted to the different loop L1, all data (items) in the input buffer of the loop L0 are sequentially outputted with the different loop flags added thereto (④ in Fig. 12).

Incidentally, the respective switch devices SW20 and SW00 switches the O-loop to the C-loop when the devices received the management data packets again.

By this means, it becomes possible to isolate the faulty switch device instantly.

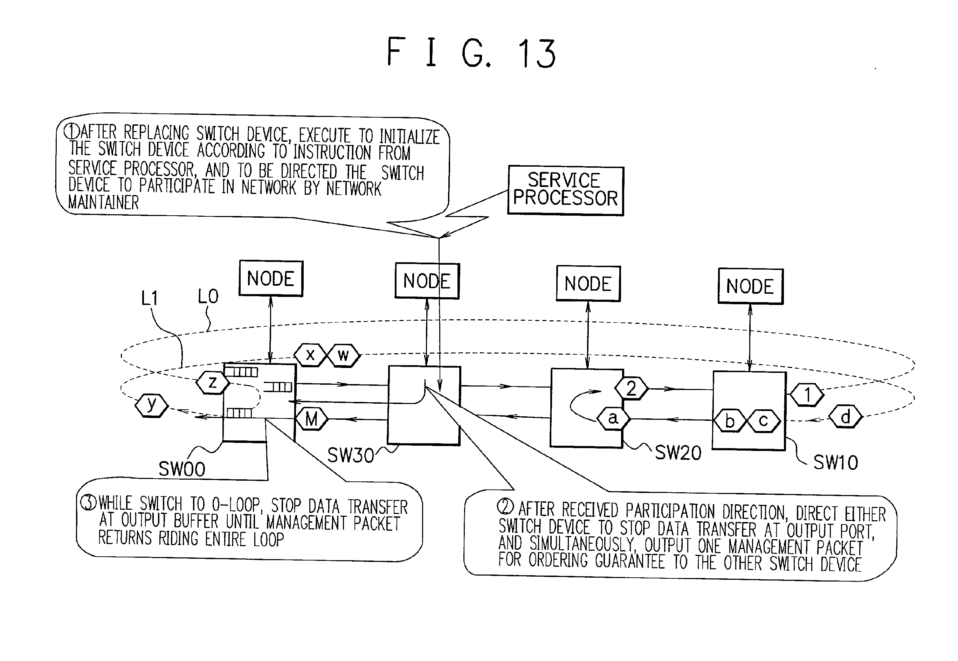

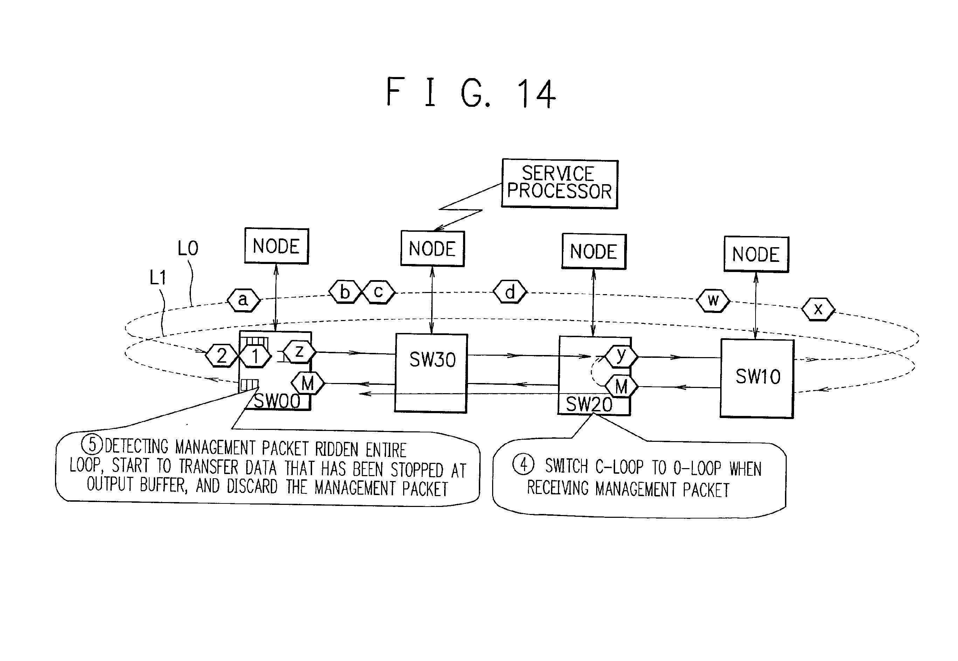

In the following, an explanation will be given of transition from the C-loop to the O-loop referring to Figs. 13 and 14. In Figs. 13 and 14, illustrations are given of a case of transition from the C-loop circumventing the switch device SW30 to the O-loop.

Having replaced the switch device SW30, a network maintainer initializes the newly added switch device SW30 (and/or node) and directs the switch device SW30 to participate in the network (① in Fig. 13).

Having received the direction, the switch device SW30 transmits a management packet to either of the switch device SW00 or SW20 located at both sides of the switch device SW30. In parallel, the switch device SW30 directs the other switch device to stop data transfer (buffer data), for example, at the output buffer (② in Fig. 13). In this case, it is assumed that the switch device SW30 transmits the management packet ("M" in Fig. 13) to the switch device SW00 through the loop L1.

Having received the management packet, the switch device SW00 stops the data transfer, for example, at the output data generating section 31 (stops the output buffer) for the loop L0 until the management packet is returned again to the switch device SW00. Moreover, the switch device SW00 switches the C-loop to the O-loop (③ in Fig. 13). In Fig. 13, the switch device SW00 buffers the data "z" and the data inputted thereafter at the output data generating section 31 for the loop L0 in the switch device SW00. Subsequently, the switch device SW00 outputs the management data using the same loop L1 through which the management data was inputted. The management packet arrives at the switch device SW20 via the switch device SW10 through the loop L1.

When the management packet arrives at the switch device SW20, data "y" flowing in the loop L1 in the switch device SW20 moves to the loop L0. After all data moved to the loop L0, the switch device SW20 switches the C-loop to the O-loop (④ in Fig. 14). In the configuration in Fig. 8, when the decode control section 22 for the loop L1 in the switch device SW20 detected the management packet, the C-loop is switched to the O-loop on the basis of the instruction from the loop topology control section 15 in the switch device SW20.

The switch device SW20 outputs the management packet received through the loop L1 to the loop L1. Subsequently, the management packet is inputted again into the switch device SW00 through the loop L1 via the switch device SW30.

The switch device SW00 starts to transfer data that has been stopped at the output data generating section 31 triggered by the re-detection of the management packet. To be concrete, having detected the management packet, the decode control section 22 in the switch device SW00 directs the output data generating section 31 to release the transfer stop through the loop topology control section 15. Subsequently, the data "z", "1" and "2" in Fig. 14 are transferred from the output port for the loop L0 to the switch device SW30 in this order through the loop L0. The management packet is discarded at the decode control section 22 (⑤ in Fig. 14).

By this means, it becomes possible to switch the C-loop to the O-loop with a guarantee of ordering while preventing system down.

As set forth hereinbefore, according to the present invention, when a line becomes unusable because of a fault, the C-loop is built, and thus enabling data to be transferred through the C-loop with a guarantee of the transaction ordering circumventing the faulty section. Therefore, it becomes possible to repair, replace and/or maintain the faulty line without the stop of the data transfer.

Moreover, it becomes unnecessary to establish a full duplex system if the C-loop is employed. Therefore, it becomes possible to avoid dual investment for the hardware (namely, it is not necessary to establish and maintain a working loop (line) and a standby line). Moreover, even when a fault occurs in a section of the loop, it becomes possible to operate the system without any influence on the normal section in the network. Thereby, high-availability can be realized in a cluster system, multiprocessor system, etc.

In addition, the data can be detoured through the C-loop with a guarantee of the ordering without an interposition such as switch.

Further, when maintaining and checking a switch device (node), the switch device can be maintained, checked, and/or replaced while the system operation is continued by the C-loop circumventing the object switch device. Thereby, the maintainability of the system can be enhanced.

Furthermore, a new switch device (and node) can be added to the network in an arbitrary position in the loop network without interrupting the operation of the loop network (system). This is realized by establishing a C-loop circumventing a section on which the new switch device will be added, and by restoring the C-loop to the O-loop after the expansion processing is finished. In this way, the scalability and expandability can be increased to a large extent.

What is more, when fatal failure such as hardware serious failure occurs in a switch device, it becomes possible to build the C-loop wherein the node that serves as the owner of the faulty switch device and the network section related to the faulty switch device can be circumvented. Thereby, the faulty switch device can be isolated from the loop network without any influence on the system operation. Namely, even when a fault occurs in a switch device (node), it becomes possible to build the C-loop wherein the faulty switch device is isolated from the loop network to continue the data transfer through the loop network wherein the faulty section is circumvented. The isolated switch device is not used during C-loop operation, and thus enabling the faulty section to be replaced and/or repaired without any influence on the network operation.

By this means, by employing the loop network according to the present invention, a high-availability system can be realized. Therefore, the present invention can be applied to a field requiring a mission critical system.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until the data has been successfully transferred, and retransmits the buffered data when the transfer failed;
when an 0-loop is used:
each switch device takes in data addressed to a node related to the switch device, and delivers the data to the node, and transfers other data through the same loop through which the data was inputted;
when a fault occurs in a loop between adjacent two switch devices:
a switch device located immediate upstream of the faulty section switches the O-loop to a C-loop by connecting an input port on the faulty loop to an output port on the other loop in one pair, and transfers buffered data from the output port; and
after the switch device located immediate upstream of the faulty section switched the loop to the C-loop, a switch device located immediate downstream of the faulty section switches the O-loop to the C-loop by connecting an output port on the faulty loop and an input port on the other loop in one pair, and transfer data through the C-loop circumventing the faulty section;
when the C-loop is used;
a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the switch device wherein the input port on a loop is connected to the output port on the other loop in one pair takes in all data addressed to a node related to the switch device, and transfers other data from the output port.

2. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until the data has been successfully transferred, and retransmits the buffered data when the transfer failed;
when an O-loop is used:
each switch device takes in data addressed to a node related to the switch device, and delivers the data to the node, and transfers other data through the same loop through which the data was inputted;
when there is a direction to build a C-loop circumventing a section between arbitrary two switch devices adjacent to each other by a network maintainer:
one of the two switch devices switches the 0-loop to the C-loop by connecting an input port on a loop through which data is transferred to the other switch device and an output port on the other loop in one pair, and transfers buffered data from the output port; and
the other switch device switches the O-loop to the C-loop by connecting an input port on a loop through which data is transferred to the one of the switch devices and an output port on the other loop in one pair, and transfers data through the C-loop circumventing the section between the switch devices;
when the C-loop is used;
a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the switch device wherein the input port on a loop is connected to the output port on the other loop in one pair takes in all data addressed to a node related to the switch device, and transfers other data from the output port.

3. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device comprises a switch device switchover demanding means, a degradation loop transition means, a buffering data transferring means, and an ordering guarantee means;
when an O-loop is used:
the ordering guarantee means in a switch device takes in data addressed to a node related to the switch device, delivers the data to the node, and transfers other data through the same loop through which the data was inputted; and
the buffering data transferring means in a switch device buffers data until the data has been successfully transferred, and retransmits the buffered data when the transfer failed;
when a fault occurs in a loop between adjacent two switch devices, the switch device switchover demanding means in a switch device detecting the fault transmits a switchover demand for switching the O-loop to a C-loop to a switch device located immediate upstream of the faulty section;
the degradation loop transition means in the switch device that transmitted the switchover demand transfers data buffered by the buffering data transferring means through the O-loop, connects an output port on the faulty loop to an input port on the other loop in one pair to switch the O-loop to the C-loop; and
having received the switchover demand, the buffering data transferring means in the switch device located immediate upstream of the faulty section switches the O-loop to the C-loop by connecting an input port on the faulty loop to an output port on the other loop in one pair, transfers buffered data from the output port, and transfers data through the C-loop;
when the C-loop is used;
the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the ordering guarantee means in the switch device wherein the input port on a loop is connected to the output port on the other loop in one pair takes in all data addressed to a node related to the switch device, and transfers other data from the output port.

4. A loop network wherein a plurality of switch devices are connected through multiple loops, a pair of loops are connected to each of the switch devices, and the respective loops in one pair transmit data in the opposite directions, including a switchover instructing means, wherein:
each node transmits data to another node through a predetermined loop using a predetermined switch device; and
each switch device comprises, a switch device switchover demanding means, a degradation loop transition means, a buffering data transferring means, and ordering guarantee means;
when an O-loop is used:
the ordering guarantee means in a switch device takes in data addressed to a node related to the switch device, delivers the data to the node, and transfers other data through the same loop through which the data was inputted; and
the buffering data transferring means in a switch device buffers data until the data has been successfully transferred, and retransmits the buffered data when the transfer failed;
when the switchover instructing means is directed to build a C-loop circumventing a section between arbitrary two switch devices adjacent to each other by a network maintainer:
the switchover instructing means transmits a switchover instruction to the switch device switchover demanding means in one of the switch devices;
having received the switchover instruction, the switch device switchover demanding means in the one of the switch devices transmits a switchover demand for switching the O-loop to the C-loop to the other switch device;
after the switch device switchover demanding means transmitted the switchover demand, the degradation loop transition means in the one of the switch devices to which the switchover instruction was inputted transfers data buffered by the buffering data transferring means through the 0-loop, and switches the O-loop to the C-loop by connecting an input port on a loop through which data is transferred to the one of the switch devices to an output port on the other loop in one pair; and
having received the switchover demand, the buffering data transferring means of the other switch device switches the 0-loop to the C-loop by connecting an input port on a loop through which data is transferred to the one of the switch devices to an output port on the other loop in one pair, transfers buffered data from the output port, and transfers data through the C-loop circumventing the section between the two switch devices;
when the C-loop is used:
the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the ordering guarantee means in the switch device wherein the input port of a loop is connected to the output port of the other loop in one pair takes in data addressed to a node related to the switch device, and transfers other data from the output port.

5. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until the data has been successfully transferred, and retransmits the buffered data when the transfer failed;
when an O-loop is used:
each switch device takes in data addressed to a node related to the switch device, and delivers the data to the node, and transfers other data through the same loop through which the data was inputted; and
when hardware serious failure occurs:
a switch device located immediate downstream of a usable loop switches the O-loop to a C-loop by connecting an output port on the usable loop and an input port on the other loop in one pair, and transfers buffered data from the output port; and
a switch device located immediate upstream of the usable loop switches the O-loop to the C-loop by connecting an input port on the usable loop to an output port on the other loop in one pair, transfers buffered data from the output port, and transfers data through the C-loop circumventing the faulty section;
when the C-loop is used:
a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

6. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device buffers data until data has been successfully transferred to a switch device located immediate downstream, and retransmits the buffered data to the switch device located immediate downstream when the transfer failed:
when an O-loop is used:
each switch device takes in data addressed to a node related to the switch device, and delivers the data to the node, and transfers other data;
when an arbitrary switch device is instructed to build a C-loop circumventing the switch device by a network maintainer:
the instructed switch device directs one of the switch devices adjacent to the instructed switch device to switch the O-loop to the C-loop by connecting an input port on a loop through which data is transferred to the instructed switch device and an output port on the other loop in one pair, and to transfer buffered data from the output port; and
the instructed switch device directs the other switch device to switch the O-loop to the C-loop by connecting an input port on a loop through which data is transferred to the instructed switch device and an output port on the other loop in one pair, to transfer buffered data from the output port, and to transfer data through the C-loop circumventing the instructed switch device;
when the C-loop is used:
a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

7. A loop network wherein a plurality of switch devices are connected through multiple loops, a pair of loops are connected to each of the switch devices, and the respective loops in one pair transmit data in the opposite directions, wherein:
each node transmits data to another node through a predetermined loop using a predetermined switch device; and
each switch device comprises a switchover notifying means, failure occurrence notifying means, a buffering data transferring means, and an ordering guarantee means;
when an O-loop is used:
the ordering guarantee means in a switch device takes in data addressed to a node related to the switch device, delivers the data to the node, and transfers other data through the same loop through which the data was inputted;
the buffering data transferring means buffers data until the data has been successfully transferred, and retransmits the buffered data when the transfer failed;
the switchover notifying means in a switch device in which hardware serious failure occurred in a loop in one pair transmits a serious failure notification for demanding a switchover from the O-loop to a C-loop to a switch device located immediate downstream of the faulty section;
after the switchover notifying means transmitted the serious failure notification, the failure occurrence notifying means in the switch device having the hardware serious failure transmits a switchover demand for switching the O-loop to the C-loop to a switch device located immediate upstream of the faulty section; and
the buffering data transferring means in the switch device having received the serious failure occurrence notification or the switchover demand switches the O-loop to the C-loop by connecting an input port on a loop through which data can be transferred to the switch device that transmitted the failure occurrence notification or the switchover demand and an output port on the other loop in one pair, and transfers buffered data from the output port;
when the C-loop is used:
the ordering guarantee means in a switch device wherein an input port on a loop is not connected to an output port on the other loop in one pair takes in data addressed to a node related to the switch device and inputted through a predetermined loop of a node that transmitted the data, and transfers other data from an output port on the same loop through which the data was inputted; and
the ordering guarantee means in the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

8. A loop network wherein a plurality of switch devices are connected through multiple loops, a pair of loops are connected to each of the switch devices, and the respective loops in one pair transmit data in the opposite directions, including a switchover instructing means, wherein:
each node transmits data to another node through a predetermined loop using a predetermined switch device; and
each switch device comprises a switchover notifying means, a failure occurrence notifying means, a buffering data transferring means, and an ordering guarantee means;
when an O-loop is used:
the ordering guarantee means in a switch device takes in data addressed to a node related to the switch device, delivers the data to the node, and transfers other data through the same loop through which the data was inputted; and
the buffering data transferring means buffers data until the data has been successfully transferred, and retransmits the buffered data when the transfer failed;
when the switchover instructing means is directed to build a C-loop circumventing a switch device specified by a network maintainer:
the switchover instructing means transmits a switchover instruction to the switchover notifying means in the specified switch device;
having received the switchover instruction, the switchover notifying means in the specified switch device transmits a first switchover demand for switching the O-loop to the C-loop to one of the switch devices adjacent to the specified switch device;
after the switchover notifying means transmitted the first switchover demand, the failure occurrence notifying means in the specified switch device transmits a second switchover demand for switching from the O-loop to the C-loop to the other switch device; and
having received the first or second switchover demand, the buffering data transferring means in each of the switch devices switches the O-loop to the C-loop by connecting an input port on a loop through which data can be transferred to the sender of the first or second switchover demand to an output port on the other loop in one pair, transfers buffered data from the output port, and transfers data inputted thereafter through the C-loop circumventing the specified switch device;
when the C-loop is used:
the ordering guarantee means in a switch device wherein an input port on a loop is not connected to an output port on the other loop takes in data addressed to a node related to the switch device and inputted through a predetermined loop of a node that transmitted the data, and transfers other data from an output port on the same loop through which the data was inputted; and
the ordering guarantee means in the switch device wherein the input port on a loop is connected to the output port on the other loop in one pair takes in all data addressed to a node related to the switch device, transfers other data from the output port, and does not transfer data addressed to a node related to the switch device that is not connected to the C-loop.

9. The loop network as claimed in claim 1 or 2 wherein, when the C-loop is switched to the O-loop;
one of the two switch devices in which the input port on a loop is connected to the output port on the other loop in one pair stops data transfer, buffers inputted data, and transmits a management packet through the C-loop, and when receiving the management packet again, transfers the buffered data through the C-loop, and switches the loop to the O-loop to start data transfer through the O-loop; and
the other switch device switches the loop to the O-loop when receiving the management packet, and transfers the management packet to the one of the switch devices.

10. The loop network as claimed in claim 1, 2 ,5 or 6 wherein, when the C-loop is switched to the O-loop:
a switch device that is to participate in the network transmits a management packet to one of the switch devices adjacent to the participating switch device;
having received the management packet, the one of the switch devices stops data transfer, buffers inputted data, switches the C-loop to the O-loop, and transfers the management packet through the O-loop, and when receiving the management packet again, transfers the buffered data through the O-loop, and start data transfer through the O-loop; and
having received the management packet, the other switch device switches the C-loop to the O-loop, transfers the management packet through the O-loop, and transfers data inputted thereafter through the O-loop.

11. The loop network as claimed in claim 3 or 4, further including a normal loop transition means, wherein, when the C-loop is switched to the O-loop:
the normal loop transition means in one of the two switch devices wherein the input port on a loop is connected to the output port on the other loop in one pair stops data transfer, buffers inputted data, and transfers a management packet through the C-loop, and when receiving the management packet again, transfers the buffered data through the C-loop, and switches the loop to the O-loop to start data transfer through the O-loop; and
having received the management packet, the normal loop transition means in the other switch device switches the loop to the O-loop, and transfers the management packet through the O-loop.

12. The loop network as claimed in claim 3, 4, 7 or 8, further including a normal loop transition means, wherein, when a switch device participates in the network and the C-loop is switched to the O-loop:
the normal loop transition means in the participating switch device transmits a management packet to one of the switch devices adjacent to the participating switch device;
having received the management packet, the one of the switch device stops data transfer, buffers inputted data, switches the C-loop to the O-loop, and transfers the management packet through the O-loop, and when receiving the management packet again, transfers the buffered data through the C-loop, and starts data transfer through the O-loop; and
when receiving the management packet from the one of the switch device, the other switch device switches the C-loop to the O-loop, and transfers the management packet through the O-loop.

13. The loop network as claimed in claim 3, 4, 7, 8, 11 or 12, wherein:
the data includes information about a loop in which the data is being transferred: and
the ordering guarantee means determines whether or not to take in data referring to the information.

14. A method for operating a loop network wherein a plurality of switch devices are connected through multiple loops, a pair of loops are connected to each of the switch devices, and the respective loops in one pair transmit data in the opposite directions, when a fault occurs in a loop between adjacent two switch devices, including the steps of:
directing a switch device located immediate upstream of the faulty section to switch an O-loop to a C-loop by connecting an input port on the faulty loop to an output port on the other loop in one pair, and to transfer buffered data from the output port; and
directing a switch device located immediate downstream of the faulty section to switch the O-loop to the C-loop by connecting an output port on the faulty loop to an input port on the other loop in one pair to transfer data through the C-loop;
when the C-loop is used:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which the data was inputted; and
directing the switch device wherein the input port on a loop is connected to the output port on the other loop in one pair to take in all data addressed to a node related to the switch device, and to transfer other data from the output port.

15. A method for operating a loop network wherein a plurality of switch devices are connected through multiple loops, a pair of loops are connected to each of the switch devices, and the respective loops in one pair transmit data in the opposite directions, when there is a direction to build a C-loop circumventing a section between arbitrary two switch devices adjacent to each other by a network maintainer, including the steps of:
directing one of the two switch devices to switch an O-loop to a C-loop by connecting an input port on a loop through which data is transferred to the other switch device and an output port on the other loop in one pair, and to transfer buffered data from the output port; and
directing the other switch device to switch the O-loop to the C-loop by connecting an input port on a loop through which data is transferred to the one of the switch devices to an output port on the other loop in one pair to transfer data through the C-loop circumventing the section between the switch devices;
when the C-loop is used:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which the data was inputted; and
directing the switch device wherein the input port on a loop is connected to the output port on the other loop in one pair to take in all data addressed to a node related to the switch device, and to transfer other data from the output port.

16. A method for operating a loop network wherein a plurality of switch devices are connected through multiple loops, a pair of loops are connected to each of the switch devices, and the respective loops in one pair transmit data in the opposite directions, including the steps of:
instructing a switch device in which hardware serious failure occurred to direct a switch device located immediate downstream of a usable loop to switch an O-loop to a C-loop by connecting an output port on the usable loop to an input port on the other loop in one pair and to transfer buffered data from the output port; and
instructing the switch device in which the hardware serious failure occurred to direct a switch device located immediate upstream of the usable loop to switch the O-loop to the C-loop by connecting an input port on the usable loop to an output port on the other loop in one pair, to transfer buffered data from the output port, and to transfer data through the C-loop circumventing the switch device having the hardware serious failure;
when the C-loop is used:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which the data was inputted; and
directing the switch device wherein the input port on a loop is connected to the output port on the other loop in one pair to take in all data addressed to a node related to the switch device, to transfer other data from the output port, and not to transfer data addressed to a node related to the switch device that is not connected to the C-loop.

17. A method for operating a loop network wherein a plurality of switch devices are connected through multiple loops, a pair of loops are connected to each of the switch devices, and the respective loops in one pair transmit data in the opposite directions, when an arbitrary switch device is instructed to build a C-loop circumventing the switch device, including the steps of:
directing the instructed switch device to direct one of two switch devices adjacent to the instructed switch device to switch an O-loop to a C-loop by connecting an input port on a loop through which data is transferred to the instructed switch device to an output port on the other loop in one pair, and to transfer buffered data from the output port; and
directing the instructed switch device to direct the other switch device to switch the O-loop to the C-loop by connecting an input port on a loop through which data is transferred to the instructed switch device to an output port on the other loop in one pair, to transfer buffered data from the output port, and transfer data through the C-loop circumventing the instructed switch device;
when the C-loop is used:
directing a switch device wherein an input port on a loop is not connected to an output port on the other loop in one pair to take in data addressed to a node related to the switch device and inputted through a predetermined loop of a node that transmitted the data, and to transfer other data from an output port on the same loop through which

18. The method as claimed in claim 14 or 15, when switching the C-loop to the O-loop, further including the steps of:
directing one of the two switch devices in which the input port on a loop is connected to the output port on the other loop in one pair to stop data transfer, to buffer inputted data, and to transfer a management packet through the C-loop;
directing the other switch device to switch the loop to the O-loop when receiving the management packet, and to transfer the management packet to the one of the switch devices; and
directing the one of the switch devices to transfer the buffered data through the C-loop when receiving the management packet again, and to switch the loop to the O-loop to start data transfer through the O-loop.

19. The method as claimed in claim 16 or 17, when switching the C-loop to the O-loop, further including the steps of:
directing a switch device to participate in the network to transmit a management packet to one of the switch devices adjacent to the participating switch device;
directing the one of the switch devices to stop data transfer when receiving the management packet, to buffer inputted data, to switch the C-loop to the O-loop, and transfer the management packet through the O-loop;
directing the other switch device to switch the C-loop to the O-loop when receiving the management packet, to transfer the management packet through the O-loop, and to transfer buffered data through the O-loop; and
directing the one of the switch devices to transfer the buffered data through the C-loop when receiving the management packet again, to start data transfer, and to transfer data through the O-loop.
